# EUROPÄISCHE PATENTANMELDUNG

(11) **EP 2 551 565 A1**
(43) Veröffentlichungstag der Anmeldung: **30.01.2013**
(21) Anmeldenummer: 11175737.3
(22) Anmeldetag: 28.07.2011
(51) Int. Cl.: F16K 3/314, F16K 51/02

(54) **Vakuumventil und Verschlussglied zum gasdichten Schliessen eines Fliesswegs mittels einer Linearbewegung**

(71) Anmelder: VAT Holding AG, 9469 Haag (CH)
(72) Erfinder: Geiser, Friedrich, 6714 Nüziders (AT); Neumeir, Anton, 86415 Mering (DE); Duelli, Bernhard, 6834 Übersaxen (AT); Blecha, Thomas, 6800 Feldkirch (AT); Summer, Karlheinz, 6700 Bludenz (AT)
(74) Vertreter: Kaminski Harmann

(57) **Zusammenfassung**

Die Erfindung betrifft ein Vakuumventil (1) zum gasdichten Schliessen eines Fliesswegs (F) mittels einer Linearbewegung, mit einem Verschlussglied (5), das linear verschiebbar ist, einer die Öffnung (3) umschliessenden ersten Dichtfläche (10) des Ventilgehäuses (2) und einer mit der ersten Dichtfläche (10) korrespondierenden zweiten Dichtfläche (11) des Verschlussglieds (5). Die zweite Dichtfläche (11) steht in der geschlossenen Position (C) in einem auf die erste Dichtfläche (10) in Schliessrichtung (8) drückenden, dichtenden Kontakt mit der ersten Dichtfläche (10) und das Verschlussglied (5) verschliesst die Öffnung (3) gasdicht. Das Ventilgehäuse (2) weist im Bereich zwischen der Öffnung (3) und der ersten Dichtfläche (10) eine die Öffnung (3) umschliessende erste Schrägfläche (22) und das Verschlussglied (5) eine parallel zu der ersten Schrägfläche (22) verlaufende, mit der ersten Schrägfläche (22) korrespondierende zweite Schrägfläche (23) auf. Die Schrägflächen (22, 23), die einen Schrägstellungswinkel (24) zwischen 3 und 15 Grad zur geometrischen Verstellachse (6) haben, liegen derart zueinander, dass die zweite Schrägfläche (23) in der geschlossenen Position (C) des Verschlussglieds (5) in paralleler Gegenüberlage zu der ersten Schrägfläche (22) mit einem Abstand (v) zueinander zwischen 0 und 0,6 mm angeordnet ist.

## Beschreibung

Die Erfindung betrifft ein Vakuumventil zum gasdichten Schliessen eines Fliesswegs mittels einer Linearbewegung nach dem Oberbegriff des Anspruchs 1 und des Anspruchs 16 sowie ein entsprechendes Verschlussglied nach dem Oberbegriff des Anspruchs 13 und des Anspruchs 28.

Vakuumventile nach dem Oberbegriff des Anspruchs 1 und des Anspruchs 16 sowie Verschlussglieder nach dem Oberbegriff des Anspruchs 13 und des Anspruchs 28 sind insbesondere in Form des als Rechteckinsertventil ausgestalteten Transferventils mit der Produktbezeichnung "MONOVAT Reihe 02 und 03" der Firma VAT Vakuumventile AG in Haag, Schweiz bekannt. Der Aufbau und die Funktionsweise eines solchen Ventils werden beispielsweise in der US 4,809,950 (Geiser) und der US 4,881,717 (Geiser) in schematischer Weise beschrieben.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Die Anforderungen an die bei Vakuumventilen zum Einsatz kommenden Dichtungen sind sehr hoch. Einerseits muss im geschlossenen Zustand des Ventils die Dichtigkeit des Ventils gewährleistet sein. Dies ist vor allem aufgrund der im Vakuumbereich hohen Differenzdrücke und der somit auftretenden grossen Kräfte, die auf den Ventilverschluss wirken, eine grosse Herausforderung. Da die zum Einsatz kommenden Dichtungen bei übermässig hohen Verpressungen einem überdurchschnittlichen hohen Verschleiss unterliegen oder zerstört werden, muss der Aufbau des Ventils derart sein, dass die Differenzdruckkräfte nicht oder nur begrenzt auf die Dichtungen wirken können. Ausserdem sind Querbelastungen und Längsbelastungen auf die Dichtung möglichst gering zu halten. Vor allem bei Querbelastungen quer zu der Längsrichtung der Dichtung besteht bei O-Ring-Dichtungen die Gefahr, dass sie aus ihrer Halterung, insbesondere der Nut, in welcher sie fixiert sind, gerissen werden. Auch aufvulkanisierte Dichtungen dürfen nur sehr begrenzten Querkräften ausgesetzt werden. Sowohl im geöffneten als auch geschlossenen Zustand des Ventils sind die Dichtungen zum Teil aggressiven Medien ausgesetzt und müssen daher entweder derart beschaffen sein, dass sie den Einflüssen standhalten können, und/oder aus dem Fliessweg des Mediums, auch zur Vermeidung von Abrasion, herausbewegt werden. Ein übermässig hoher Verschleiss der Dichtung stellt einen Unsicherheitsfaktor für die Prozesssicherheit dar und erfordert einen regelmässigen Austausch der Dichtung, was wiederum zu erhöhten Stillstandszeiten im Prozess führt.

Unterschiedliche Ausführungsformen von Vakuumventilen, insbesondere deren Dichtungs- und Antriebstechnologien, sind aus dem Stand der Technik bekannt, welche unter anderem als Ziel die Erhöhung der Lebensdauer der eingesetzten Dichtungen sowie eine verbesserte Prozesssicherheit haben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Die beschriebene zweistufige Bewegung, bei welcher das Verschlussglied zuerst quer über die Öffnung geschoben wird, ohne dass es zu einer Berügung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Nachteilig ist jedoch der verhältnismässig komplexe Aufbau des Antriebs, der insbesondere entweder von einem einzigen Antrieb, der eine L-förmige Bewegung des Verschlussglieds ermöglicht, oder von einer Mehrzahl an Antrieben, beispielsweise zwei Linearantrieben oder einem Linear- und einem Spreizantrieb, gebildet wird. Spreizantriebe, welche meist unmittelbar hinter dem Verschlussteller angeordnet sind und diesen relativ zu dem Schaft, auf welchem sie sich befinden, in senkrechter Richtung auf den Ventilsitz verstellen, haben ausserdem den Nachteil, dass eine Vielzahl an mechanischen Teilen, welche zueinander Relativbewegungen ausführen, im Ventilinneren angeordnet sind. Dies erhöht zu einen die Komplexität des Aufbaus und zum anderen die Erzeugung von prozessschädigenden Reibpartikeln. Ein weiterer Nachteil der mehrstufigen Bewegung ist die begrenzte Verstellgeschwindigkeit des Verschlussglieds zwischen dem vollständig geöffneten und dem vollständig geschlossenen Zustand. Keilventile, die lediglich linear verstellt werden, ermöglichen zwar eine hohe Verstellgeschwindigkeit, sie eignen sich jedoch aufgrund der Querbeanspruchung der Dichtung nur bedingt für den Einsatz als Hauptdichtung im Vakuumbereich, und wenn doch, dann für nur wenige Verstellzyklen.

Dieses Problem wird mittels Schieberventilen gelöst, bei welchen der Schliess- und Dichtvorgang zwar über eine einzige lineare Bewegung erfolgt, jedoch die Dichtgeometrie derart ist, dass eine Querbeanspruchung der Dichtung gänzlich vermieden wird. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Das dort beschriebene Ventil besitzt in seinem Gehäuse eine Dichtfläche, die, in Richtung der Achse der Ventildurchgangsöffnung gesehen, hintereinander liegende Abschnitte besitzt, die in seitlich nach aussen verlaufende, ebene Dichtflächenabschnitte über stetig verlaufende Krümmungen übergehen, wobei die gedachten Erzeugenden dieser einteiligen, aber mehrere Abschnitte aufweisenden Dichtfläche parallel zur Achse der Ventildurchgangsöffnung liegen. Die Dichtfläche ist bearbeitet. Das Verschlussglied besitzt eine dazu korrespondierende Auflagefläche für die umfangsgeschlossene Dichtung. Detaillierter beschrieben besitzt der so genannte Ventilschieber ein Schiebergehäuse und eine Schieberdurchgangsöffnung, die mit einem in seiner Ebene verschiebbaren Verschlussglied verschliessbar ist. Im Bereich der Schieberdurchgangsöffnung ist eine Dichtfläche vorgesehen, an der in der Schliessstellung des Verschlussgliedes eine an diesem angeordnete, umfangsgeschlossene Dichtung anliegt, wobei die gedachten, geraden Erzeugenden der Dichtfläche parallel zur Achse der Schieberdurchgangsöffnung liegen. Die umfangsgeschlossene, einstückige Dichtung weist Abschnitte unterschiedlicher Längen und/oder Formen auf, die in verschiedenen Ebenen liegen, wobei zwei Hauptabschnitte der umfangsgeschlossenen Dichtung in Ebenen liegen, welche zur Achse der Schieberdurchgangsöffnung rechtwinklig stehen und voneinander distanziert sind. Die beiden Hauptabschnitte der Dichtung sind durch Seitenabschnitte verbunden. Das Verschlussglied besitzt zum Verlauf der Dichtfläche des Gehäuses eine korrespondierend verlaufende, die umfangsgeschlossene Dichtung tragende Fläche. Die Seitenabschnitte der umfangsgeschlossenen Dichtung verlaufen U-förmig. Jeweils die Schenkel dieser U-förmig verlaufenden Seitenabschnitte liegen in einer Ebene. Die in Achsrichtung der Schieberdurchgangsöffnung gesehen hintereinander liegenden Abschnitte der Dichtfläche gehen für die Anlage der Hauptabschnitte der Dichtung in jenem Bereich, in dem sie eine gemeinsame, gerade, achsparallele Erzeugende besitzen, in seitlich nach aussen verlaufende ebene Dichtflächenabschnitte über. Diese ebenen Dichtflächenabschnitte liegen in zueinander und zur Achse der Schieberdurchgangsöffnung parallel liegenden Ebenen.

Ein geeigneter Antrieb für ein solches, mittels einer linearen Bewegung verschliessbares Transferventil ist in der JP 6241344 (Buriida Fuuberuto) dargestellt. Der dort beschriebene Antrieb besitzt exzentrisch gelagerte Hebel zum linearen Verschieben der Schubstangen, auf welchen das Verschlussglied montiert ist.

In der US 2008/0053957 A1 (Wakabayashi) werden unter anderem Ventilschieber für Substratbearbeitungssysteme mit einem geknickten oder gekrümmten Ventilquerschnitt beschrieben, die entweder mittels einer mehrstufigen L-förmigen Bewegung oder mittels einer linearen Bewegung schliessbar sind.

Der aus dem Stand der Technik bekannte und in der US 4,809,950 (Geiser) beschriebene Ventilschieber wird im Folgenden anhand der Figuren 8a und 8b beschrieben. Der dort rein schematisch gezeigte Ventilschieber hat zur besseren Veranschaulichung des Verlaufs der Dichtflächen einen runden Öffnungsquerschnitt, während das unter der Produktbezeichnung "MONOVAT Reihe 02 und 03" bekannte und als Rechteckinsertventil ausgestaltete Transferventil der Firma VAT Vakuumventile AG in Haag, Schweiz einen rechteckigen Öffnungsquerschnitt aufweist, dessen Breite wesentlich grösser ist als dessen Höhe.

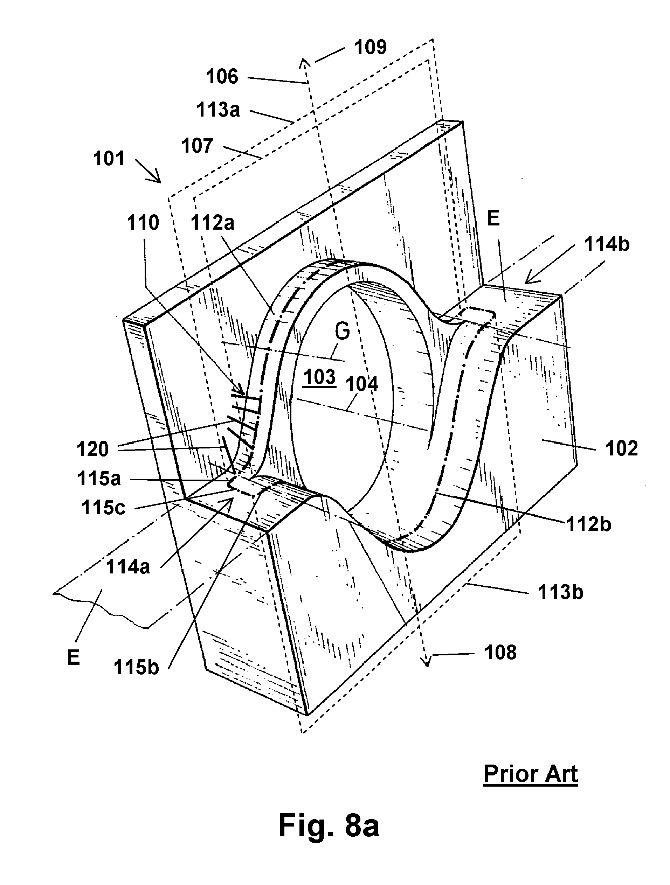

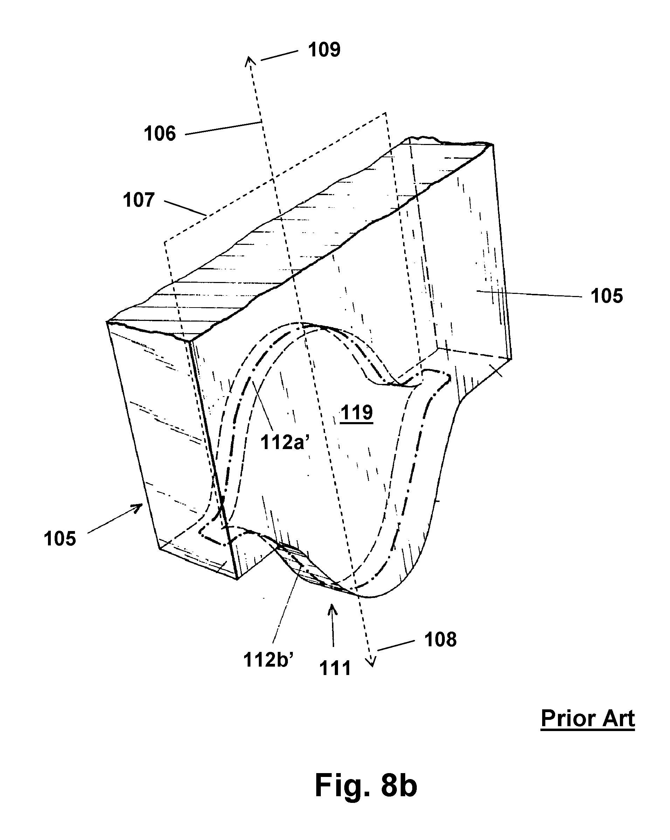

Das Ventil 101 zum gasdichten Schliessen eines Fliesswegs mittels einer Linearbewegung besitzt ein Ventilgehäuse 102 mit einer Öffnung 103 für den Fliessweg, wobei die Öffnung 103 eine geometrische Öffnungsachse 104 entlang des Fliesswegs aufweist, wie in Figur 8a gezeigt. Ein in Figur 8b dargestelltes Verschlussglied 105 ist linear entlang einer zu der Öffnungsachse 104 quer verlaufenden, geometrischen Verstellachse 106 in einer Verschlussgliedebene 107 von einer die Öffnung 103 freigebenden, geöffneten Position in eine über die Öffnung 103 linear geschobene, geschlossene Position in eine Schliessrichtung 108 und umgekehrt zurück in eine Öffnungsrichtung 109 verschiebbar, wie in Figur 8a dargestellt.

In den Figuren 8a und 8b sind das Ventilgehäuse 102 und das Verschlussglied 105 separat im auseinander gebauten Zustand dargestellt, wobei insbesondere die Verstellachse 106 die relative Lage und Verstellbarkeit der beiden Teile 102 und 105 verdeutlicht.

Eine gekrümmte erste Dichtfläche 110 umschliesst die Öffnung 103 des Ventilgehäuses 102. Auf dem Verschlussglied 105 ist eine mit der ersten Dichtfläche 110 korrespondierende zweite Dichtfläche 111 des Verschlussglieds 105, die eine der ersten Dichtfläche 110 entsprechende Form aufweist, angeordnet. Im Folgenden wird vor allem der Aufbau der ersten Dichtfläche 110 des Ventilgehäuses 102 beschrieben. Aufgrund des entsprechenden, mit der ersten Dichtfläche 110 korrespondierenden Aufbaus kann auf eine detaillierte Beschreibung der entsprechenden zweiten Dichtfläche 111 verzichtet werden.

Vorzugsweise auf der zweiten Dichtfläche 111, und/oder auf der ersten Dichtfläche 110, ist eine nicht dargestellte Dichtung, beispielsweise in Form einer aufvulkanisierten Dichtung oder eines O-Rings, angeordnet, die entlang der jeweiligen Dichtfläche, insbesondere der dargestellten Strichpunktlinie verläuft. Zur Vereinfachung werden im Folgenden die Dichtflächen 110 und 111 als dichtend wirkende Flächen, also die Dichtung bzw. der Ventilsitz betrachtet. Die erste Dichtfläche 110 setzt sich aus unterschiedlich geformten, jeweils zu der Verstellachse 106 nichtparallelen Abschnitten 112a, 112b, 114a, 114b zusammen. Die Flächennormalen 120 der Abschnitte 112a, 112b, 114a, 114b der ersten Dichtfläche 110 weisen Richtungskomponenten auf, die zu der Verstellachse 106 jeweils parallel sind. In anderen Worten weisen alle Flächennormalen 120 der ersten Dichtfläche 110 zumindest teilweise, also mit einer Richtungskomponente, in die Öffnungsrichtung 109, wie in Figur 8a anhand der mittels kurzer Striche veranschaulichten Flächennormalen 120 gezeigt. Wieder in anderen Worten weist die erste Dichtfläche 110 senkrecht oder schräg in die Öffnungsrichtung 109 und verläuft in keinem Abschnitt parallel zu der Verstellachse 106. Somit verläuft keine der Flächennormalen 120 der ersten Dichtfläche parallel zu einer geometrischen Normalebene, die von der Verstellachse 106 senkrecht durchstossen wird.

Ein erster Hauptabschnitt 112a der ersten Dichtfläche 110, Figur 8a, sowie ein korrespondierender erster Hauptabschnitt 112a' der zweiten Dichtfläche 111, Figur 8b, verlaufen entlang einer geometrischen ersten Hauptebene 113a. Die Flächennormalen 120 des ersten Hauptabschnitts 112a liegen in der ersten Hauptebene 113a. Ein zweiter Hauptabschnitt 112b der ersten Dichtfläche 110, Figur 8a, sowie ein korrespondierender zweiter Hauptabschnitt 112b' der zweiten Dichtfläche 111, Figur 8b, verlaufen hingegen entlang einer geometrischen zweiten Hauptebene 113b. Die Flächennormalen 120 dieses zweiten Hauptabschnitts 112b liegen in der zweiten Hauptebene 113b. Die erste Hauptebene 113a und die zweite Hauptebene 113b sind zueinander beabstandet, verlaufen parallel zueinander und parallel zu der Verschlussgliedebene 107. Somit weisen der erste Hauptabschnitt 112a und der gegenüberliegende zweite Hauptabschnitt 112b zueinander einen geometrischen Versatz quer zu der Verstellachse 106 und in Richtung der Öffnungsachse 104 auf. Zwischen den beiden gegenüberliegenden Hauptabschnitten 112a und 112b in dem sich entlang der Verstellachse 106 erstreckenden Bereich ist die Öffnung 103 angeordnet.

Ein seitlicher erster U-förmiger Seitenabschnitt 114a der ersten Dichtfläche 110 verbindet den ersten Hauptabschnitt 112a und den zweite Hauptabschnitt 112b auf der einen Seite der ersten Dichtfläche 110, während ein seitlicher zweiter U-förmiger Seitenabschnitt 114b der ersten Dichtfläche 110 den ersten Hauptabschnitt 112a und den zweiten Hauptabschnitt 112b auf der anderen Seite der ersten Dichtfläche 110 verbindet.

Der erste U-förmige Seitenabschnitt 114a und der zweite U-förmige Seitenabschnitt 114b weisen jeweils einen dem ersten Hauptabschnitt 112a zugeordneten ersten Schenkel 115a, einen dem zweiten Hauptabschnitt 112b zugeordneten zweiten Schenkel 115b und eine Basis 115c auf. Die beiden ersten Schenkel 115a verlaufen jeweils entlang ersten Schenkelebenen, die jeweils zu der Verstellachse 6 parallel sind und die jeweils auf der ersten Hauptebene 113a liegen. In anderen Worten verlaufen die beiden ersten Schenkel 115a und der erste Hauptabschnitt 112a entlang einer Ebene, nämlich der ersten Hauptebene 113a, wobei die Flächennormalen der ersten Schenkel 115a und des ersten Hauptabschnitts 112a in dieser ersten Hauptebene 113a liegen. Die beiden zweiten Schenkel 115b verlaufen wiederum jeweils entlang zu der Verstellachse 6 parallelen zweiten Schenkelebenen, die jeweils auf der zweiten Hauptebene 113b liegen. In anderen Worten verlaufen die zweiten Schenkel 115b und der zweite Hauptabschnitt 112b entlang einer Ebene, nämlich der zweiten Hauptebene 113b, wobei die Flächennormalen der beiden zweiten Schenkel 115b und des zweiten Hauptabschnitts 112b in dieser zweiten Hauptebene 113b liegen. Wie auch der erste Hauptabschnitt 112a und der zweite Hauptabschnitt 112b weisen somit die beiden ersten Schenkel 115a zu den beiden zweiten Schenkeln 115b einen geometrischen Versatz quer zu der Verstellachse 106 und in Richtung der Öffnungsachse 104 auf.

Die jeweilige Basis 115c des ersten U-förmigen Seitenabschnitts 114a und des zweiten U-förmigen Seitenabschnitts 114b verbindet jeweils den ersten Schenkel 115a und den zweiten Schenkel 115b miteinander und überbrückt den geometrischen Versatz quer zu der Verstellachse 106 in Richtung parallel zu der Öffnungsachse 104. Die beiden Basen 115c liegen auf einer gemeinsamen geometrischen Ebene E, die von der Verstellachse 106 senkrecht durchstossen wird und parallel zu der Öffnungsachse 104 liegt.

Die zweite Dichtfläche 111 kann durch lineares Verschieben des Verschlussgliedes 105 entlang der Verstellachse 106 in die Schliessrichtung 108 in die geschlossene Position gebracht werden, in welcher die zweite Dichtfläche 111 auf die erste Dichtfläche 110 in die Schliessrichtung 8 drückt und somit in einem dichtenden Kontakt mit der ersten Dichtfläche 110 steht, wodurch das Verschlussglied 105 mit seiner seitlichen Verschlussfläche 119 die Öffnung 103 gasdicht verschliesst.

Dieses aus dem Stand der Technik bekannte, mittels einer einzigen linearen Bewegung schliessbare Vakuumventil hat zahlreiche Vorteile gegenüber den mittels zweier Bewegungen schliessbaren Transferventilen, die einen verhältnismässig komplex aufgebauten Antrieb erfordern, oder gegenüber den Keilventilen, bei welchen die Dichtungen quer beansprucht werden. Da das Verschlussglied des oben beschriebenen Vakuumventils einteilig ist, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist. Die umlaufende Dichtung findet in allen ihren Abschnitten eindeutig reproduzierbare Verhältnisse bei den diversen Schliessvorgängen vor. Da die Dichtung beim Schliessen und beim Auftreten des Schliessdruckes im Wesentlichen nur in Richtung der linearen Schliessbewegung in senkrechter Richtung auf die Dichtung bzw. teilweise in Längsrichtung, nicht jedoch quer zu ihrer Längserstreckung beansprucht wird, so dass Querkräfte auf die Dichtung vermieden werden, eignet sich dieses Vakuumventil für hochqualifizierte Dichtaufgaben im Vakuum- und Hochvakuumbereich. Die Dichtflächen können ausserdem bearbeitet werden, um den hohen Dichtanforderungen zu genügen. Das Verschlussglied selbst besitzt möglichst wenig gegeneinander bewegte Teile, wodurch die Erzeugung von prozessschädlichen Partikeln, die insbesondere durch Reibung, vor allem durch Metallreibung und Abriebpartikel der Metall- und Kunststoffelemente, weitgehend vermieden werden kann.

Wie aus den Figuren 8a und 8b ersichtlich, hat das beschriebene Ventil 101 jedoch den Nachteil, dass die beiden seitlich neben der Öffnung 103 angeordneten Seitenabschnitte 114a und 114b die Breite der Ventilgehäuses 102 im Verhältnis zu der Breite der Öffnung 103 erhöhen. Die U-förmigen Übergangsbereiche der beiden Dichtflächen 110 und 111 erhöhen somit die Erstreckung des Ventilgehäuses 102 in die Breite. Im Vergleich zu Schieberventilen des L-Typs mit einem L-förmigen Bewegungsablauf ist das beschriebene, linear verstellbare Ventil 101 verhältnismässig breit. Bei zahlreichen Anwendungen ist dies unproblematisch, jedoch gibt es Einsatzbereiche insbesondere von Transferventilen, in welchen die Öffnungsbreite möglichst gross unter Beibehaltung einer vorgegebenen Gehäusebreite sein sollte. Zwar wäre es möglich, die seitlichen Flanken der Hauptabschnitte 112a und 112b steiler ansteigen zu lassen und somit den Winkel zwischen den Flächennormalen 120 und der Verstellachse 106 zu vergrössern, wodurch sich die Ausrichtung der Dichtflächen 110 und 111 einer parallelen Ausrichtung zur Verstellachse 106 nähern, jedoch würde hierdurch die Längsbelastung der Dichtung entlang ihrem Längsverlauf im Bereich der steilen Flanken erhöht werden. Dies würde zwar die Baubreite des Ventils im Verhältnis zur Öffnungsbreite reduzieren, jedoch würde die Dichtung einem höheren Verschleiss unterliegen.

Ein grosser Vorteil des beschriebenen Ventils ist, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse 104 kaum in der Lage, auf das Verschlussglied 105 entlang der Öffnungsachse 104 auftretende Kräfte, die insbesondere bei grossem Differenzdruck auf das Verschlussglied 105 wirken können, aufzunehmen, was einen robusten Aufbau des Verschlussglieds 105, dessen Antriebs und dessen Lagerung erfordert.

Obwohl sich das beschriebene Ventil bereits durch eine ausserordentlich geringe Partikelgenerierung auszeichnet, wird ausserdem angestrebt, die Erzeugung von ungewollten Partikeln in dem Ventil weiter zu reduzieren.

In zahlreichen Prozessen kommen aggressive Gase - beispielsweise ein aggressiver Plasmastrom - zum Einsatz, welche den Dichtstoff der Dichtung chemisch in erheblichem Mass angreifen. Dies ist insbesondere bei Ätzprozessen oder Beschichtungsprozessen im Bereich der Halbleiterindustrie der Fall. Selbst in der geschlossenen Stellung des Verschlussglieds, insbesondere bei geschlossenem Ventilteller, wird die dynamische Hauptdichtung des Ventiltellers stetig dem auf der einen Seite des Ventils vorhandenen aggressiven Medium ausgesetzt, da dieses zur dynamischen Hauptdichtung gelangt und von dieser blockiert wird. Somit ist die dynamische Hauptdichtung des Ventiltellers dem aggressiven Medium ausgesetzt und unterliegt einem gewissen erhöhten Verschleiss.

Durch Fortschreiten der Halbleitertechnologie sind auch die Anforderungen an die Vakuumventiltechnik in den letzten Jahren stetig gestiegen. Neue Halbleiterfertigungsverfahren fordern somit ein Austauschen der Dichtungen eines Vakuumventils in sogar noch kürzeren Intervallen. Die bisher aus dem Stand der Technik bekannten Vakuumventile ermöglichen teilweise ein Austauschen der Dichtung, beispielsweise durch Austauschen des als statische Dichtung ausgebildeten O-Rings. Vakuumventile, deren Anschlusse hingegen über aufvulkanisierte statische Dichtungen verfügen, machen einen raschen Austausch der Dichtung jedoch unmöglich, so dass zum Teil der gesamte Ventilteller ausgetauscht werden muss.

Aus diesem Grunde sind Vakuumventile der genannten Art regelmässig derart aufgebaut, dass ein einfaches Austauschen der dynamischen Dichtung möglich ist, beispielsweise durch Entfernen des Ventiltellers, auf welchem die Dichtung angeordnet ist, und Ersetzen des Ventiltellers gegen einen neuen Ventilteller. Ein hierfür ausgelegtes Vakuumschieberventil, das eine Wartungsöffnung zum einfachen Entfernen des Ventiltellers sowie eine zum schnellen Austausch geeignete Schnittstelle zwischen dem Ventilteller und der Schubstange des Ventilantriebs vorsieht, sowie ein passendes Multifunktionswerkzeug ist in der US 7,134,642 (Seitz) beschrieben.

Doch selbst ein relativ schnelles und einfaches Austauschen der Dichtung bzw. der Dichtungen oder des gesamten Ventilverschlusses erfordert eine Unterbrechung des Prozesses, unter Umständen ein Fluten der Kammern mit Umgebungsluft und den Einsatz von Ersatzteilen. Wünschenswert wäre die Erhöhung der Lebensdauer der Dichtungen und somit eine Erhöhung der Wartungs- und Austauschintervalle.

Eine Aufgabe der Erfindung ist es daher, ein Ventil zum im Wesentlichen gasdichten Unterbrechen eines Fliesswegs sowie ein entsprechendes Verschlussglied zur Verfügung zu stellen, dessen dynamische Dichtung eine erhöhte Lebensdauer aufweist.

Eine weitere Aufgabe der Erfindung ist es, ein Vakuumventil der eingangs genannten Art sowie ein entsprechendes Verschlussglied zu schaffen, das sich durch einen einfachen Aufbau, eine hohe Verstellgeschwindigkeit, eine geringe Beanspruchung der Dichtung, eine reduzierte Baubreite und eine erhöhte Belastbarkeit auszeichnet.

Diese Aufgaben werden durch die Verwirklichung der Merkmale der unabhängigen Ansprüche gelöst. Merkmale, welche die Erfindung in alternativer oder vorteilhafter Weise weiterbilden, sind den abhängigen Patentansprüchen zu entnehmen.

Das erfindungsgemässe Vakuumventil zum gasdichten Schliessen eines Fliesswegs mittels einer Linearbewegung umfasst ein Ventilgehäuse mit einer Öffnung für den Fliessweg und ein linear entlang einer Verstellachse verschiebbares Verschlussglied. Unter dem Fliessweg ist allgemein ein zu schliessender Öffnungspfad zwischen zwei Bereichen - insbesondere zwischen zwei Beschichtungsanlagen jeglicher Art, beispielsweise für Solar- oder sonstige Anwendungen, oder zwischen einer Prozesskammer zur Halbleiterfertigung und entweder einer weiteren Prozesskammer oder der Aussenwelt - zu verstehen. Der Fliessweg ist beispielsweise ein Verbindungsgang zwischen zwei miteinander verbundenen Prozesskammern, wobei die Prozesskammern mittels des Vakuumventils zum Transfer der Halbleiterteile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres meist rechteckigen Öffnungsquerschnitts auch als Rechteckschieber bezeichnet. Selbstverständlich ist jedoch auch jede beliebige andere Anwendung des erfindungsgemässen Vakuumventils zum im Wesentlichen gasdichten Schliessen eines beliebigen Fliesswegs möglich.

Die Öffnung kann einen beliebigen, insbesondere rechteckigen, kreisrunden oder ovalen Querschnitt aufweisen. Vorzugsweise ist das Vakuumventil als ein Transferventil mit einem länglichen, insbesondere im Wesentlichen rechteckigen Öffnungsquerschnitt ausgebildet, wobei die Breite der Öffnung senkrecht zu der Verstellachse vorzugsweise mindestens das Doppelte oder mindestens das Dreifache oder mindestens das Fünffache der Höhe der Öffnung parallel zu der Verstellachse beträgt. Es ist jedoch auch möglich, den Öffnungsquerschnitt anders auszugestalten, beispielsweise kreisrund, wobei das Vakuumventil zum Beispiel ein Pumpenventil ist. Die Öffnung hat eine Mittelachse, die sich im Bereich der Öffnung in der Mitte des Fliesswegs parallel zu diesem erstreckt. Diese geometrische Öffnungsachse steht beispielsweise senkrecht auf der von der Öffnung aufgespannten Fläche und erstreckt sich entlang des Fliesswegs.

Das Verschlussglied ist allgemein der Verschluss, mittels welchem die Öffnung gasdicht verschlossen werden kann. Das Verschlussglied, das als Ventilteller ausgebildet sein kann, ist das linear entlang einer zu der Öffnungsachse quer verlaufenden, geometrischen Verstellachse in einer Verschlussgliedfläche zwischen einer geöffneten Position und einer geschlossenen Position verschiebbar. Vorzugsweise verläuft die Verstellachse senkrecht zu der Öffnungsachse und liegt auf einer Ebene, die senkrecht von der Öffnungsachse durchstossen wird. Alternativ verläuft die Verstellachse schräg und nichtparallel zu der Öffnungsachse, wobei der Schnittwinkel insbesondere zwischen 90 Grad und 45 Grad beträgt. Die geometrische Verstellachse liegt auf der geometrischen Verschlussgliedfläche. Die Verschlussgliedfläche kann parallel zu einer von dem Verschlussglied definierten Verschlussfläche verlaufen und ist vorzugsweise im Wesentlichen parallel zu der von der Öffnung aufgespannten Fläche. Die Verschlussgliedfläche ist allgemein als geometrische Fläche zu verstehen, auf welcher die Verstellachse liegt und zu welcher in einer speziellen Ausführungsform die Öffnungsachse eine Flächennormale bildet, unabhängig von der tatsächlichen Ausformung der Verschlussfläche.

In der geöffneten Position des Verschlussgliedes gibt selbiges die Öffnung teilweise oder vollständig frei, indem es teilweise bzw. vollständig ausserhalb des Projektionsbereichs der Öffnung angeordnet ist. In der geschlossenen Position befindet sich das Verschlussglied vollständig im Projektionsbereich der Öffnung, wobei die Verschlussfläche des Verschlussglieds auf die Öffnung weist und diese vorzugsweise vollständig überdeckt. Die Verstellrichtung des Verschlussglieds entlang der Verstellachse von der geöffneten in die geschlossene Position wird als Schliessrichtung bezeichnet, wohingegen die entgegengesetzte Verstellrichtung von der geschlossenen Position in die geöffnete Position als Öffnungsrichtung definiert ist.

Die Öffnung wird von einer zumindest teilweise gekrümmten ersten Dichtfläche, die dem Ventilgehäuse zugeordnet ist, umschlossen. Dies bedeutet, dass rings um die Öffnung eine erste Dichtfläche angeordnet ist. Auf dem Verschlussglied befindet sich eine zweite Dichtfläche, deren Form der ersten Dichtfläche entspricht. Die zweite Dichtfläche korrespondiert also mit der ersten Dichtfläche, wobei die Dichtflächen eine einander entsprechende Form haben, so dass die zweite Dichtfläche auf der ersten Dichtfläche zum Liegen kommen kann, wobei die Dichtflächen entlang ihres Verlaufs einen konstanten Abstand in Richtung parallel zur Verstellachse haben. Die zweite Dichtfläche des Verschlussglieds umschliesst die Verschlussfläche des Verschlussglieds, welche derart dimensioniert ist, dass sie die Öffnung vollständig überdecken kann.

Die erste Dichtfläche und die zweite Dichtfläche liegen einander gegenüber, wobei der Abstand der Gegenüberlage durch Verstellen des Verschlussgliedes entlang der Verschlussachse verringert oder vergrössert werden kann.

In der geschlossenen Position des Verschlussglieds liegt die zweite Dichtfläche auf der ersten Dichtfläche auf, wobei durch ein Aufpressen der zweiten Dichtfläche auf die erste Dichtfläche in Schliessrichtung ein gasdichter Kontakt zwischen den Dichtflächen herrscht.

Die erste Dichtfläche und die zweite Dichtfläche setzen sich jeweils aus unterschiedlich geformten, jeweils zu der Verstellachse nichtparallelen Abschnitten zusammen. In anderen Worten weisen die Flächennormalen der Abschnitte der ersten Dichtfläche und der zweiten Dichtfläche jeweils Richtungskomponenten auf, die zu der Verstellachse parallel sind. Somit weist die erste Dichtfläche senkrecht oder schräg in die Öffnungsrichtung und die zweite Dichtfläche senkrecht oder schräg in die Schliessrichtung. Liegen die Dichtflächen in der geschlossenen Position aufeinander und werden in Schliessrichtung aufeinander gedrückt, so wird die dazwischen liegende Dichtung nicht ausschliesslich längs oder gar quer beansprucht, sondern stets auch zumindest teilweise senkrecht verpresst. Die einzelnen Abschnitte der ersten und zweiten Dichtfläche entsprechen einander insofern, als dass sie in der geschlossenen Position aufeinander aufliegen. Daher wird im Folgenden zu Teil nur der jeweilige Abschnitt der ersten Dichtfläche beschrieben.

Als Dichtflächen sind allgemein diejenigen Flächen des Ventilgehäuses und des Verschlussgliedes zu verstehen, die in der geschlossenen Position aufeinander liegen und den dichtenden Kontakt bilden. Die eine Dichtfläche kann somit von dem senkrecht nach aussen weisenden Abschnitt einer Dichtung, insbesondere einer O-Ring-Dichtung oder einer aufvulkanisierten Dichtung, gebildet werden und die andere Dichtfläche von einem Ventilsitz, also einer Auflagefläche für die Dichtung. Die Dichtflächen sind somit diejenigen Flächen, die tatsächlich die gasdichte Abdichtung durch gegenseitigen Kontakt in der geschlossenen Position bewirken. Die Dichtung kann vorzugsweise auf dem Verschlussglied, aber alternativ auch auf dem Ventilgehäuse, oder auf beiden Teilen angeordnet sein.

Die erste Dichtfläche und die zweite Dichtfläche haben jeweils einen ersten Hauptabschnitt, der im Wesentlichen entlang einer geometrischen ersten Hauptfläche verläuft. In anderen Worten erstreckt sich der erste Hauptabschnitt jeweils längs entlang der ersten Hauptfläche. Der erste Hauptabschnitt kann sich gerade oder nicht gerade in der ersten Hauptfläche oder im Wesentlichen entlang der ersten Hauptfläche erstrecken. Insbesondere kann er eine Kurvenform aufweisen. Der erste Hauptabschnitt muss nicht zwangsläufig geometrisch exakt in der ersten Hauptfläche verlaufen.

Ausserdem haben die erste Dichtfläche und die zweite Dichtfläche jeweils einen zweiten Hauptabschnitt, der in einer speziellen Ausführungsform dem ersten Hauptabschnitt in seiner Formgebung im Wesentlichen entsprechen kann. Es ist jedoch auch möglich, dass die ersten Hauptabschnitte und die zweiten Hauptabschnitte unterschiedliche Formen aufweisen. Der jeweilige zweite Hauptabschnitt der ersten und zweiten Dichtfläche erstreckt sich entlang einer gemeinsamen geometrischen zweiten Hauptfläche, wobei er ebenso wie der erste Hauptabschnitt gerade oder nicht gerade verlaufen kann und entweder exakt in der zweiten Hauptfläche liegt oder lediglich im Wesentlichen entlang dieser verläuft.

Die geometrische erste Hauptfläche und die geometrische zweite Hauptfläche verlaufen im Wesentlichen zueinander parallel, wobei eine geringfügige Schieflage möglich ist, und haben zueinander zumindest im Bereich der Dichtflächen einen Abstand. Die erste und zweite Hauptfläche liegen im Wesentlichen parallel zu der Verschlussgliedfläche. Die Verschlussachse verläuft somit im Wesentlichen parallel zu der ersten und zweiten Hauptfläche. Aufgrund des Abstands der beiden Hauptflächen haben der erste Hauptabschnitt und der gegenüberliegende zweite Hauptabschnitt zueinander einen geometrischen Versatz quer zu der Verstellachse, und zwar im Wesentlichen in Richtung der Öffnungsachse.

Zwischen dem ersten Hauptabschnitt und dem gegenüberliegenden zweiten Hauptabschnitt der ersten Dichtfläche des Ventilgehäuses ist in dem sich entlang der Verstellachse erstreckenden Bereich die Öffnung angeordnet. Zwischen dem ersten und dem zweiten Hauptabschnitt der zweiten Dichtfläche liegt die Verschlussfläche des Verschlussglieds.

Ein seitlicher erster U-förmiger Seitenabschnitt der ersten Dichtfläche verbindet den ersten Hauptabschnitt und den zweite Hauptabschnitt auf der einen Seite der ersten Dichtfläche miteinander, während ein seitlicher zweiter U-förmiger Seitenabschnitt der ersten Dichtfläche den ersten Hauptabschnitt und den zweiten Hauptabschnitt auf der anderen Seite der ersten Dichtfläche miteinander verbindet, wodurch die erste Dichtfläche geschlossen wird. Entsprechende U-förmige Seitenabschnitte sind auf der zweiten Dichtfläche angeordnet.

Der erste U-förmige Seitenabschnitt und der zweite U-förmige Seitenabschnitt setzen sich jeweils aus einem ersten Schenkel, der dem ersten Hauptabschnitt zugeordnet ist, einem zweiten Schenkel, der dem zweiten Hauptabschnitt zugeordnet ist und in einer speziellen Ausführungsform von dieser gebildet wird, und einer Basis zusammen. Diese Basis ist beispielsweise als zweidimensionaler Bogen, eine Ebene oder als dreidimensionales Segment einer Helix ausgebildet oder weist eine sonstige Form zur Verbindung der Schenkel auf.

Der erste Schenkel des ersten U-förmigen Seitenabschnitts der ersten Dichtfläche verläuft insbesondere im Wesentlichen entlang einer ersten Schenkelebene des ersten U-förmigen Seitenabschnitts. Auch der erste Schenkel des zweiten U-förmigen Seitenabschnitts der ersten Dichtfläche verläuft insbesondere im Wesentlichen entlang einer ersten Schenkelebene des zweiten U-förmigen Seitenabschnitts. Diese beiden ersten Schenkelebenen der ersten Dichtfläche verlaufen vorzugsweise parallel zu der Verstellachse. In anderen Worten verlaufen die beiden ersten Schenkel jeweils im Wesentlichen entlang zu der Verstellachse parallelen ersten Schenkelebenen. Wie auch im Falle der Hauptflächen ist es nicht zwangsläufig erforderlich, dass die ersten Schenkel exakt auf den ersten Schenkelebenen liegen. Beispielsweise ist ein leicht gebogener Verlauf der Schenkel entlang der Schenkelebene möglich. Alternativ können die Schenkel auf Freiformflächen liegen.

Auch die beiden zweiten Schenkel der ersten Dichtfläche verlaufen insbesondere jeweils im Wesentlichen entlang einer zweiten Schenkelebene, die jeweils zu der Verstellachse parallel verläuft. Diese zweiten Schenkeleben können in einer speziellen Ausführungsform von der zweiten Hauptfläche gebildet werden.

Der erste Schenkel und der zweite Schenkel haben jeweils zueinander einen geometrischen Versatz quer zu der Verstellachse. Dieser Versatz kann in einer speziellen Ausführungsform dem Versatz der beiden Hauptabschnitte entsprechen. Die jeweilige Basis, welchen zwischen jeweils einem Schenkelpaar angeordnet ist, verbindet jeweils den ersten Schenkel und den zweiten Schenkel miteinander und überbrückt den geometrischen Versatz quer zu der Verstellachse.

Gemäss einem ersten Aspekt der Erfindung wird in der geschlossenen Stellung des Ventils nicht nur ein dichtender Kontakt zwischen den beiden Haupt-Dichtflächen des Ventils hergestellt, sondern ausserdem wird durch zwei Schrägflächen, die nicht-parallel zu der Verstellachse des Verschlussglieds um die Öffnung herum bzw. auf dem Verschlussglied angeordnet sind, eine Barriere zwischen dem Bereich der Öffnung und den Dichtflächen erzeugt, indem die beiden Schrägflächen in der geschlossenen Position in naher oder kontaktierender Gegenüberlage sind und somit das aggressive Medium weitgehend von den beiden Haupt-Dichtflächen des Ventils ferngehalten wird. In anderen Worten bilden die beiden Schrägfläche eine keilartige Zusatzdichtung oder Vordichtung, welche zwischen der Öffnung und der Hauptdichtung wirkt.

Das Ventilgehäuse besitzt im Bereich zwischen der Öffnung und der ersten Dichtfläche eine erste Schrägfläche, welche die Öffnung umschliesst. In anderen Worten ist rings um die Öffnung eine insbesondere ringförmige oder rahmenförmige erste Schrägfläche angeordnet, welche sich radial zwischen der Öffnung und den unterschiedlichen Abschnitten der ersten Dichtfläche erstreckt. Vorzugsweise wird die erste Schrägfläche innen von der Öffnung und aussen von der ersten Dichtfläche direkt oder indirekt begrenzt. Das Verschlussglied weist eine zweite Schrägfläche auf, die parallel zu der ersten Schrägfläche verläuft, mit der ersten Schrägfläche korrespondiert und eine der ersten Schrägfläche entsprechende Form hat. Dies heisst, dass die beiden Schrägflächen funktional zumindest in einem Teilabschnitt rings um die Öffnung eine einander entsprechende Form haben und aufeinander oder nahezu aufeinander mit konstantem Spaltmass entlang dem Umfang der Öffnung zum Liegen gebracht werden können.

Sowohl die erste Schrägfläche, als auch die zweite Schrägfläche stehen - zumindest in der geschlossenen Position oder auch in der offenen Position des Verschlussglieds - jeweils mit einem bestimmten Schrägstellungswinkel gegenüber der Verschlussgliedfläche derart schräg, und zwar geringfügig schräg, dass die erste Schrägfläche des Ventilgehäuses schräg in die Öffnungsrichtung weist und die zweite Schrägfläche des Verschlussglieds schräg in die Schliessrichtung weist. Dies bedeutet, dass die beiden zueinander parallelen Schrägflächen nicht-parallel, jedoch fast-parallel zu der Verschlussgliedfläche und auch nicht-parallel, aber fast-parallel zu der Verstellachse liegen, sondern gegenüber diesen geringfügig schräg stehen, nämlich mit dem genannten bestimmten Schrägstellungswinkel. Die erste Schrägfläche und die zweite Schrägfläche werden in ihren geometrischen Verlängerungen von der geometrischen Verstellachse mit dem genannten, bestimmten Schrägstellungswinkel geschnitten.

Erfindungsgemäss beträgt dieser Schrägstellungswinkel zwischen 3 und 15 Grad. In anderen Worten sind die beiden Schrägflächen um 3 bis 15 Grad gegenüber der Verschlussgliedfläche schräg gestellt.

Die erste Schrägfläche und die zweite Schrägfläche liegen derart zueinander, dass die zweite Schrägfläche in der geschlossenen Position des Verschlussglieds in paralleler Gegenüberlage zu der ersten Schrägfläche mit einem relativen Abstand zwischen 0 und 0,6 mm zueinander angeordnet ist. In anderen Worten sind die beiden Schrägflächen durch das Verstellen des Verschlussglieds von der offenen Position in die verschlossene Position derart in Schliessrichtung keilartig aufeinander zu bewegbar, dass der senkrechte Abstand der Schrägflächen zueinander in der geschlossenen Position nur noch 0 bis 0,6 mm beträgt und somit ein aggressives Medium, welches an der Öffnung des Ventils anliegt, an einem unmittelbaren Vordringen zu der ersten und zweiten Dichtfläche des Ventils gehindert wird. Der Abstand beträgt rings um die Öffnung herum vorzugsweise im Wesentlichen den gleichen Wert, mit einer Abweisung von vorzugsweise unter 10%. Sofern der Abstand gleich 0 ist, besteht zwischen den Schrägflächen rings um die Öffnung herum Kontakt.

In einer möglichen Ausführungsform sind sowohl die erste Schrägfläche des Ventilgehäuses, als auch die zweite Schrägfläche des Verschlussglieds nicht-elastisch ausgebildet. Hierunter ist zu verstehen, dass die beiden Schrägflächen aus keinem gewollt elastischen Material bestehen. Insbesondere handelt es sich bei den beiden Schrägflächen um bearbeitete Flächen des Grundmaterials des Ventilgehäuses bzw. des Verschlussglieds. Insbesondere werden die beiden Schrägflächen von Metallflächen gebildet. In dieser Ausführungsform ist das Vakuumventil derart ausgebildet, dass der Abstand zwischen den Schrägflächen in der geschlossenen Position des Verschlussglieds möglichst gering ist, jedoch ein berührender Kontakt der beiden Schrägflächen zueinander in der geschlossenen Position vermieden wird. Ein solcher Kontakt würde bei Verwendung zweier Metall-Schrägflächen zur Erzeugung von Reibartikeln führen, wodurch aufgrund der Partikelgenerierung die Prozessreinheit eventuell gefährdet werden könnte. Sehr gute Ergebnisse werden, abhängig von der Art des aggressiven Mediums, bei einem Abstand zwischen den beiden Schrägflächen von 0,05 mm bis 0,6 mm, optimale Ergebnisse zwischen 0,05 mm und 0,3 mm erzielt. Durch ein derart geringes Spaltmass von unter 0,6 mm kann das aggressive Medium nicht mehr ungehindert an die Hauptdichtung gelangen, so dass diese weitgehend geschützt wird.

Um die Hauptdichtung weitgehend vollständig vor dem unmittelbaren Kontakt mit dem aggressiven Medium zu schützen, sieht die Erfindung ausserdem vor, dass die erste Schrägfläche oder die zweite Schrägfläche von einer elastischen Zusatzdichtung gebildet wird. Es ist auch möglich, dass sowohl die erste als auch die zweite Schrägfläche von elastischen Zusatzdichtungen gebildet wird. Der Abstand zwischen den beiden Schrägflächen in der geschlossenen Position des Verschlussglieds ist in diesem Fall vorzugsweise gleich 0. In anderen Worten berühren sich in diesem Falle die beiden Schrägflächen in der geschlossenen Position und werden insbesondere geringfügig verquetscht, so dass ein - zumindest geringfügig - dichtender Kontakt durch die Schrägflächen rings um die Öffnung herum entsteht, wodurch die weiter aussen liegenden Haupt-Dichtflächen, insbesondere die elastische Haupt-Dichtung, geschützt werden. Die mindestens eine elastische Zusatzdichtung kann beispielsweise von einem in einer Nut auf dem Ventilgehäuse und/oder dem Verschlussglied angeordneten O-Ring gebildet werden. Der O-Ring kann einen beliebeigen Querschnitt aufweisen, vorzugsweise jedoch einen kreisförmigen Querschnitt, einen nierenförmigen Querschnitt oder einen X-förmigen Querschnitt. Ein O-Ring mit einem derartigen Querschnitt ist beispielsweise unter dem Markennamen QUAD-RING® des Herstellers TRELLEBORG bekannt. Alternativ ist es möglich, dass die elastische Zusatzdichtung von einer auf dem Ventilgehäuse und/oder auf dem Verschlussglied aufvulkanisierten Dichtung gebildet wird.

Um nicht nur die Hauptdichtung zu schützen, sondern ausserdem eine elektrische Abschirmung der beiden mittels des Ventils trennbaren Bereiche zu ermöglichen, sieht die Erfindung im Rahmen einer Weiterbildung vor, dass die erste Schrägfläche des Ventilgehäuses als elektrisch leitende, mit dem Ventilgehäuse bezüglich des elektrischen Potentials gekoppelte Metallfläche und die zweite Schrägfläche als geschlossenes, elektrisch leitendes Schirmungsschild ausgebildet ist. Dieses elektrisch leitende Schirmungsschild ist derart auf dem Verschlussglied angeordnet, dass es in der geschlossenen Position des Verschlussglieds die Öffnung vollständig überdeckt und rings um die Öffnung mit der ersten Schrägfläche in elektrischem Kontakt steht. Der Abstand in der geschlossenen Position ist zur Herstellung des elektrischen Kontakts rings um die Öffnung gleich 0. Durch diesen ringsum bestehenden elektrischen Kontakt mit dem Ventilgehäuse wird das Schirmungsschild mit dem Ventilgehäuse potentielle elektrisch gekoppelt.

Eine Weiterbildung der Erfindung sieht vor, dass das Ventilgehäuse und/oder das Verschlussglied im insbesondere ring- oder rahmenartigen Bereich zwischen der ersten Schrägfläche des Ventilgehäuses und der ersten Dichtfläche eine die erste Schrägfläche umschliessende Ausnehmung, insbesondere in Form einer Nut oder eines Freistichs aufweist, die auf dem Ventilgehäuse und/oder dem Verschlussglied derart angeordnet und derart ausgestaltet ist, dass der Abstand zwischen dem Ventilgehäuse und dem Verschlussglied im Bereich dieser Ausnehmung mindestens 0,8 mm, insbesondere zwischen 0,8 mm und 6 mm, beträgt. In anderen Worten umschliesst eine kanalartige Ausnehmung die erste Schrägfläche. Die Tiefe dieser kanalartigen Ausnehmung in Bezug auf die Schrägfläche beträgt vorzugsweise zwischen 0,8 und 5 mm. Mittels dieser Ausnehmung wird eine labyrinthartige Turbulenzstruktur geschaffen, welche ein Verwirbelung des durch den schmalen Bereich zwischen den Schrägflächen hindurch dringenden Mediums bewirkt, so dass dieses an einem weiteren Vordringen zu den Haupt-Dichtflächen zusätzlich gehindert wird. Die Breite dieser Ausnehmung beträgt insbesondere das Viertel bis das Vierfache, insbesondere die Hälfte bis das Doppelte ihrer Tiefe.

Ausserdem umfasst der erste Aspekt der Erfindung ein Verschlussglied, insbesondere des eingangs beschriebenen erfindungsgemässen Vakuumventils. Da die Merkmale des Verschlussglieds bereits in Zusammenhang mit dem Vakuumventil und dessen unterschiedlichen erfindungsgemässen Weiterbildungen direkt oder indirekt beschrieben wurde, wird auf die oben gemachten Ausführungen verwiesen.

Das Verschlussglied zum gasdichten Schliessen eines Fliesswegs mittels einer Linearbewegung besitzt eine geometrischen Verstellachse in einer Verschlussgliedfläche und eine zweite Dichtfläche. Diese zweite Dichtfläche setzt sich aus unterschiedlich geformten, jeweils zu der Verstellachse nichtparallelen Abschnitten zusammen. Die Flächennormalen der Abschnitte der zweiten Dichtfläche weisen zu der Verstellachse jeweils parallele Richtungskomponenten auf. Somit weist die zweite Dichtfläche senkrecht oder schräg in eine Öffnungsrichtung der Verstellachse. Ein erster Hauptabschnitt der zweiten Dichtfläche verläuft im Wesentlichen entlang einer geometrischen ersten Hauptfläche. Ein zweiter Hauptabschnitt der zweiten Dichtfläche verläuft im Wesentlichen entlang einer geometrischen zweiten Hauptfläche. Die erste Hauptfläche und die zweite Hauptfläche verlaufen parallel zu der Verstellachse, sind zueinander beabstandet und verlaufen im Wesentlichen parallel zu der Verschlussgliedfläche. Der erste Hauptabschnitt und der gegenüberliegende zweite Hauptabschnitt haben zueinander somit einen geometrischen Versatz quer zu der Verstellachse. Ein seitlicher erster U-förmiger Seitenabschnitt der zweiten Dichtfläche verbindet den ersten Hauptabschnitt und den zweiten Hauptabschnitt auf der einen Seite der zweiten Dichtfläche, während ein seitlicher zweiter U-förmiger Seitenabschnitt der zweiten Dichtfläche den ersten Hauptabschnitt und den zweiten Hauptabschnitt auf der anderen Seite der zweiten Dichtfläche verbindet. Der erste U-förmige Seitenabschnitt und der zweite U-förmige Seitenabschnitt haben jeweils einen dem ersten Hauptabschnitt zugeordneten ersten Schenkel, einen dem zweiten Hauptabschnitt zugeordneten zweiten Schenkel und eine Basis. Der erste Schenkel und der zweite Schenkel haben zueinander einen geometrischen Versatz quer zu der Verstellachse. Die jeweilige Basis verbindet jeweils den ersten Schenkel und den zweiten Schenkel und überbrückt den geometrischen Versatz quer zu der Verstellachse. Mittels der zweiten Dichtfläche ist in einer geschlossenen Position des Verschlussglieds ein dichtender Kontakt mit einer ersten Dichtfläche eines Vakuumventils zum gasdichten Verschliessen einer Öffnung des Vakuumventils durch lineares Drücken der zweiten Dichtfläche auf die erste Dichtfläche in eine Schliessrichtung der Verstellachse herstellbar.

Erfindungsgemäss ist im Bereich zwischen den Abschnitten der zweiten Dichtfläche eine zweite Schrägfläche des Verschlussgliedes angeordnet. Die zweite Schrägfläche steht mit einem Schrägstellungswinkel gegenüber der Verschlussgliedfläche derart schräg, dass die erste Schrägfläche schräg in die der Schliessrichtung entgegen gesetzte Öffnungsrichtung weist und die erste Schrägfläche in ihrer geometrischen Verlängerung von der geometrischen Verstellachse mit dem Schrägstellungswinkel geschnitten wird. Der Schrägstellungswinkel beträgt zwischen 3 und 15 Grad. Die zweite Schrägfläche ist derart ausgebildet, dass die zweite Schrägfläche in der geschlossenen Position des Verschlussglieds in parallele Gegenüberlage zu einer die Öffnung umschliessenden ersten Schrägfläche, die im Bereich zwischen der Öffnung und der ersten Dichtfläche angeordnet ist, gebracht werden kann.

Gemäss einer ersten Weiterbildung des Verschlussglieds ist die zweite Schrägfläche als geschlossenes, elektrisch leitendes Schirmungsschild, mittels welchem in der geschlossenen Position die Öffnung vollständig überdeckbar ist, ausgebildet. Alternativ wird die zweite Schrägfläche von einer elastischen Zusatzdichtung gebildet, die insbesondere von einem in einer Nut angeordneten O-Ring, insbesondere mit einem kreisförmigen Querschnitt, einem nierenförmigen Querschnitt oder einem X-förmigen Querschnitt, oder von einer auf dem Verschlussglied aufvulkanisierten Dichtung gebildet wird.

Der genannte erste Aspekt der Erfindung ist mit den Merkmalen des eingangs beschriebenen, aus dem Stand der Technik insbesondere unter der Produktbezeichnung "MONOVAT Reihe 02 und 03" bekannten Transferventil der Firma VAT Vakuumventile AG in Haag, Schweiz, welches beispielsweise in der US 4,809,950 (Geiser) und der US 4,881,717 (Geiser) beschrieben wird, kombinierbar.

In diesem Falle der bekannten restlichen Ausbildung des Ventils und Verschlusstellers verlaufen die beiden ersten Schenkel jeweils im Wesentlichen entlang zu der Verstellachse parallelen ersten Schenkelebenen. Auch die beiden zweiten Schenkel verlaufen im Wesentlichen entlang zu der Verstellachse parallelen zweiten Schenkelebenen. Die erste Hauptfläche, die zweite Hauptfläche, die Verschlussgliedfläche, die erste Schrägfläche und die zweite Schrägfläche werden jeweils von geometrischen Ebenen gebildet. Die ersten Schenkelebenen liegen auf der geometrischen Ebene der ersten Hauptfläche und die zweiten Schenkelebenen liegen auf der geometrischen Ebene der zweiten Hauptfläche. Es ist jedoch auch möglich, dass die Hauptflächen gekrümmt oder knickt sind, insbesondere um eine zur Verstellachse parallele Krümmungsachse.

Gemäss einem zweiten Aspekt der Erfindung, welcher mit dem ersten Aspekt der Erfindung kombinierbar ist, und umgekehrt, sind die ersten Schenkelebenen jeweils um mindestens 15 Grad gegenüber jeweils einer ihr zugeordneten, angrenzenden geometrischen ersten Tangentialebene zu der ersten Hauptfläche abgewinkelt. In anderen Worten verlaufen die ersten Schenkel nicht in der ersten Hauptfläche oder den ersten Tangentialebenen des ersten Hauptabschnitts, sondern sind aus dieser ersten Hauptfläche bzw. den ersten Tangentialebenen um mindestens 15 Grad herausgeklappt, wobei die Klappachse parallel zu der Verstellachse verläuft. Um einen Übergang der ersten Dichtfläche vom ersten Hauptabschnitt zum jeweiligen ersten Schenkel zu ermöglichen, ist zwischen dem ersten Hauptabschnitt und den beiden ersten Schenkeln der ersten Dichtfläche jeweils ein erster Krümmungsabschnitt der ersten Dichtfläche angeordnet. Die im ersten Hauptabschnitt entlang der ersten Hauptfläche verlaufende erste Dichtfläche geht an den beiden Enden der ersten Hauptabschnitte in den jeweiligen ersten Krümmungsabschnitt über. Dieser jeweilige Übergang von dem ersten Hauptabschnitt in den einen ersten Krümmungsabschnitt und den anderen ersten Krümmungsabschnitt erfolgt jeweils in einer geometrischen ersten Tangentialebene. Die eine erste Tangentialebene ist die Tangentialebene der ersten Hauptfläche am einen Ende des ersten Hauptabschnitts. Die andere erste Tangentialebene ist die Tangentialebene der ersten Hauptfläche am anderen Ende des ersten Hauptabschnitts. Beide ersten Tangentialebenen liegen im Wesentlichen parallel zur Verstellachse. Die beiden ersten Schenkelebenen sind jeweils um mindestens 15 Grad gegenüber der jeweiligen ersten Tangentialebene abgewinkelt. Die im ersten Hauptabschnitt entlang der ersten Hauptfläche verlaufende erste Dichtfläche wird somit aus der ersten Hauptfläche um die mindestens 15 Grad, insbesondere mittels einer geometrischen Krümmung, hinausgeführt und geht jeweils in die jeweilige erste Schenkelebene über. Dieses Hinausführen und der Übergang erfolgt jeweils in dem ersten Krümmungsabschnitt. In anderen Worten wird mittels dieses jeweiligen ersten Krümmungsabschnitts die erste Dichtfläche, die im ersten Hauptabschnitt entlang der erste Hauptfläche verläuft, also aus der ersten Hauptfläche um die genannten mindestens 15 Grad hinausgeführt ist und geht in die erste Schenkelebene über. Der jeweilige erste Krümmungsabschnitt befindet sich also im Bereich der Klappachse und ermöglicht einen Übergang der ersten Dichtfläche von der ersten Hauptfläche in die erste Schenkelebene. Bei dem ersten Krümmungsabschnitt kann es sich um eine geometrische Krümmung handeln, beispielsweise einen Bogen, um einen Knick zwischen den Ebenen, oder um eine sonstige zwei- oder dreidimensionale Formung.

In einer Weiterbildung der Erfindung sind auch die beiden zweiten Schenkelebenen jeweils um mindestens 15 Grad gegenüber jeweils einer ihr zugeordneten, angrenzenden geometrischen zweiten Tangentialebene zu der zweiten Hauptfläche abgewinkelt. Zwischen dem zweiten Hauptabschnitt und den beiden zweiten Schenkeln der ersten Dichtfläche ist jeweils ein zweiter Krümmungsabschnitt der ersten Dichtfläche angeordnet. Die im zweiten Hauptabschnitt entlang der zweiten Hauptfläche verlaufende erste Dichtfläche geht jeweils in die zweiten Krümmungsabschnitte über, wobei der jeweilige Übergang von dem zweiten Hauptabschnitt in den jeweiligen zweiten Krümmungsabschnitt jeweils in der geometrischen zweiten Tangentialebene zu der zweiten Hauptfläche erfolgt. Die beiden zweiten Schenkelebenen sind jeweils um die mindestens 15 Grad gegenüber der jeweiligen zweiten Tangentialebene abgewinkelt. Die im zweiten Hauptabschnitt entlang der zweiten Hauptfläche verlaufende erste Dichtfläche ist in dem zweiten Krümmungsabschnitt aus der zweiten Hauptfläche um die mindestens 15 Grad, insbesondere mittels einer geometrischen Krümmung, hinausgeführt und geht in die zweite Schenkelebene über. In anderen Worten wird die erste Dichtfläche jeweils um mindestens 15 Grad aus der zweiten Hauptfläche hinausgeführt und geht jeweils in die beiden zweiten Schenkelebenen über. Der jeweilige zweite Krümmungsabschnitt kann dem benachbarten ersten Krümmungsabschnitt in seiner Form entsprechen oder anders ausgestaltet sein. In einer besonderen Ausführungsform verlaufen die jeweilige erste Schenkelebene und die jeweilige zweite Schenkelebene des ersten U-förmigen Seitenabschnitts im Wesentlichen parallel zueinander, wobei in einer weiteren Ausführungsform auch die jeweilige erste Schenkelebene und die zweite Schenkelebene des zweiten U-förmigen Seitenabschnitts im Wesentlichen parallel zueinander verlaufen.

In anderen Worten unterscheidet sich dieser zweite Aspekt der Erfindung von dem eingangs beschriebenen, aus dem Stand der Technik bekannten Vakuumventil zum gasdichten Schliessen eines Fliesswegs mittels einer Linearbewegung insbesondere dadurch, dass die beiden Seitenabschnitte, in welchen der geometrische Versatz der beiden Hauptabschnitte quer zu der Verstellachse überbrückt wird und die versetzen Hauptabschnitte zusammengeführt werden, nach innen in Richtung zur Öffnungsachse oder nach aussen geklappt sind, und zwar um mindestens 15 Grad. Dieses vorzugsweise um eine zur Verstellachse im Wesentlichen parallele Klappachse erfolgte Klappen der Seitenabschnitte nach innen oder aussen bewirkt, dass sich der Übergangsbereich der versetzten Dichtungsabschnitte auch in Richtung der Öffnungsachse und nicht nur quer zu dieser erstreckt. In einer besonderen Ausführungsform, insbesondere bei einem Klappwinkel von 90 Grad, erstreckt sich dieser Übergangsbereich sogar ausschliesslich entlang der Öffnungsachse. Somit wird das Ventilgehäuse bei gleich bleibender Öffnungsbreite schmäler, wobei die Tiefe des Ventilgehäuses und des Verschlussgliedes etwas vergrössert wird.

Überraschenderweise hat sich gezeigt, dass sich durch dieses Klappen der Seitenabschnitte nach innen oder aussen noch zahlreiche weitere, erhebliche Vorteile ergeben. So erweist sich die beschriebene dreidimensionale Erstreckung der Dichtfläche als eine besonders steife Ausgestaltung für das Verschlussglied und das Ventilgehäuse, so dass es möglich ist, eine noch grössere Längenausdehnung umzusetzen, wobei Verformungen bei hohen Druckdifferenzen weitgehend vermieden werden können. Somit kann die Öffnungsbreite erheblich vergrössert werden, was vor allem bei Transferventilen für den Transfer von breiten Halbleiter- und Substrateinheiten besonders vorteilhaft ist. Ausserdem bewirkt das Klappen der Seitenabschnitte nach innen, dass die im Stand der Technik ausschliesslich in Schliessrichtung belastbare Dichtung nun auch in eine Richtung entlang der Öffnungsachse belastet werden kann, da die Dichtung in den Seitenabschnitten in diesem Falle nicht mehr ausschliesslich quer zu ihrer Längserstreckung, sondern sowohl senkrecht als auch in Längsrichtung beansprucht wird. Somit kann die Dichtung einen Teil der Kraft, welche bei einer Druckdifferenz auf das Verschlussglied wirkt, aufnehmen. Die erfindungsgemässe Dichtgeometrie ist weitgehend unempfindlich gegen Differenzdruck.

Durch die gewonnene Breite im Ventilgehäuse ist es zudem möglich, den seitlichen Bauraum zum Einbau des Linearantriebs zu nutzen. Der Linearantrieb wird somit aus dem kritischen Partikelbereich herausgeführt, so dass die Partikelgenerierung weiter reduziert wird. Das Ventil zeichnet sich durch diese Anordnung der Antriebe zudem durch eine kompakte Bauweise aus. Durch eine direkte Bewegungsübertragung sind hohe Beschleunigungen möglich.

Die ersten Schenkelebenen und/oder die zweiten Schenkelebenen sind um mindestens 15 Grad gegenüber der Hauptfläche abgewinkelt, also aus der ersten Hauptfläche bzw. zweiten Hauptfläche herausgeklappt. In einer Weiterbildung der Erfindung beträgt dieser Winkel mindestens 30 Grad oder mindestens 45 Grad oder mindestens 60 Grad. Der Winkel sollte maximal 120 Grad, vorzugsweise maximal 90 Grad betragen.

Die erste Hauptfläche kann von einer geometrischen Ebene, also einer ersten Hauptebene gebildet werden. In diesem Falle liegen die beiden ersten Tangentialebenen und die erste Hauptebene aufeinander, so dass die ersten Tangentialebenen von der ersten Hauptebene gebildet werden. Auch die zweite Hauptfläche kann von einer geometrischen Ebene, also einer zweiten Hauptebene gebildet werden, wobei die beiden zweiten Tangentialebenen und die zweite Hauptebene aufeinander liegen, so dass die zweiten Tangentialebenen von der zweiten Hauptebene gebildet werden. Ebenso ist es möglich, dass die Verschlussgliedfläche eine geometrische Ebene darstellt und somit eine Verschlussgliedebene ist. Sind alle beiden Hauptflächen somit Hauptebenen, verlaufen die beiden Hauptabschnitte jeweils auf einer Ebene. Die Hauptabschnitte müssen aber nicht zwangsläufig geometrisch exakt in der ersten Hauptebene bzw. der zweiten Hauptebene verlaufen. Es ist möglich, dass die Hauptabschnitte lediglich im Wesentlichen entlang der ersten bzw. zweiten Hauptebene, also geometrisch nicht exakt parallel zur jeweiligen Hauptebene, beispielsweise als Bogen entlang der jeweiligen Hauptebene, verlaufen.

Für gewisse Anwendungen ist es jedoch von Vorteil, wenn anstelle eines Ventils mit einem ebenen Grundquerschnitt ein Ventil mit einem gebogenen Grundquerschnitt eingesetzt wird. In diesem Falle hat das Verschlussglied keine ebene Tellerform mit einer ebenen Verschlussgliedebene, sondern eine um eine zumindest in einem Teilabschnitt um eine - insbesondere zur Verstellachse im Wesentlichen parallele - Krümmungsachse gekrümmte Grundform. Besonders im Falle eines breiten Transferventils hat eine gebogene Ausgestaltung des Grundquerschnitts erhebliche Vorteile. Im Falle eines grossen Krümmungswinkels, beispielsweise von über 60 Grad, ist es möglich, einen Transfer durch das Ventil schräg zur Öffnungsachse durchzuführen. Im Falle eines Krümmungswinkels von 90 Grad ist es beispielsweise möglich, Halbleiterelemente, insbesondere Wafer, entlang einer ersten Transferachse, die etwa 45 Grad zu der Öffnungsachse steht, durch das geöffnete Ventil in eine Prozesskammer hinein zu führen und entlang einer zweiten Transferachse, die etwa 90 Grad zur ersten Transferachse und etwa 45 Grad zur Öffnungsachse verläuft, durch das geöffnete Ventil aus der Prozesskammer heraus zu führen. Ein weiterer Vorteil eines gebogenen Grundquerschnitts besteht in der erhöhten Stabilität des Ventils in der geschlossenen Stellung des Verschlussglieds. Aufgrund der durch den gebogenen Grundquerschnitt bewirkten dreidimensionale Erstreckung der Dichtfläche ergibt sich selbst bei einer Krümmung von nur 15 Grad eine besonders steife Ausgestaltung für das Verschlussglied und das Ventilgehäuse, so dass Verformungen bei hohen Druckdifferenzen zusätzlich vermieden werden und die Öffnungsbreite erheblich vergrössert werden kann. Dies ist besonders bei Transferventilen für den Transfer von breiten Halbleiter- und Substrateinheiten von Vorteil. Daher sieht ein weiterer Aspekt der Erfindung vor, dass die erste Hauptfläche, die zweite Hauptfläche und die Verschlussgliedfläche zumindest in einem Teilabschnitt, insbesondere in mehreren Teilabschnitte oder im gesamten Bereich um eine - insbesondere zur Verstellachse im Wesentlichen parallele - Krümmungsachse gekrümmt sind. Die Krümmung zumindest in diesem Teilabschnitt kann von einer Kreiszylindermantelfläche gebildet werden oder eine sonstige Freiform haben. Insbesondere sind die erste Hauptfläche, die zweite Hauptfläche und die Verschlussgliedfläche zumindest in dem Teilabschnitt um die Krümmungsachse um mindestens 15 Grad, insbesondere um mindestens 30 Grad, insbesondere um mindestens 45 Grad, insbesondere zwischen 45 Grad und 105 Grad, gekrümmt. Es ist möglich, dass die Krümmung um mehrere Krümmungsachsen und in unterschiedliche Krümmungsrichtungen, beispielsweise in Form einer gewellten Krümmung, erfolgt. Die Krümmungsachse verläuft vorzugsweise im Wesentlichen parallel zur Verstellachse. Es ist jedoch auch möglich, dass die Krümmungsachse nicht-parallel zur Verstellachse verläuft und sie entweder mit einem Winkel, der ungleich 90 Grad ist, schneidet, oder windschief zu ihr verläuft. Allgemein ausgedrückt verläuft die Krümmungsachse nicht-parallel zu einer Ebene, die von der Verstellachse senkrecht durchstossen wird. Insbesondere schneidet die Krümmungsachse diese Ebene mit einem Winkel von 90 bis 60 Grad, insbesondere 90 bis 45 Grad, insbesondere 90 bis 30 Grad. Der Radius der Krümmung kann grösser oder kleiner als die Breite oder gleich der Breite der Öffnung sein. Der Radius kann auch derart klein sein, dass die Krümmung einen Knick darstellt. In einer besonderen Ausführungsform der Erfindung schneidet die Krümmungsachse die Öffnungsachse, insbesondere mit einem Schnittwinkel von etwa 90 Grad.

Die Hauptabschnitte können einen beliebigen Verlauf entlang der Hauptflächen haben. Beispielsweise können sie bogenförmig auf der jeweiligen Hauptfläche verlaufen, wie bei dem eingangs beschrieben, aus dem Stand der Technik bekannten Vakuumschieber der Fall.

Dieser Teilaspekt des zweiten Aspekts der Erfindung, welcher eine Krümmung der Hauptflächen beinhaltet, ist auch mit dem aus dem Stand der Technik bekannten Ventil der eingangs genannten Art, welches unter der Produktbezeichnung "MONOVAT Reihe 02 und 03" bekannt ist und in der US 4,809,950 (Geiser) und der US 4,881,717 (Geiser) beschrieben wird, kombinierbar.

In einer vor allem für ein Transferventil bevorzugten Weiterbildung der Erfindung verlaufen die Hauptabschnitte jedoch gerade entlang der Hauptfläche. Der erste Hauptabschnitt erstreckt sich auf einer ersten Horizontalebene, zu welcher die Verstellachse eine Flächennormale bildet. Der zweite Hauptabschnitt verläuft auf einer zweiten Horizontalebene, zu welcher ebenfalls die Verstellachse eine Flächennormale bildet. Die erste Horizontalebene und die zweite Horizontalebene liegen zueinander parallel und sind zueinander beabstandet. Die Hauptflächen liegen bei dieser Ausführungsform vorzugsweise senkrecht zu den Horizontalebenen. Die Horizontalebenen sind nicht auf einen absoluten Horizont des Weltkoordinatensystems bezogen, sondern beziehen sich auf das Ventilgehäuse und dessen Breitenerstreckung. Die beiden Hauptabschnitte verlaufen somit vorzugsweise parallel zueinander. Um diesen Versatz der Hauptabschnitte in Richtung der Verstellachse zu überbrücken, erstrecken sich die beiden ersten Schenkel, die beiden zweiten Schenkel und die beiden Basen zwischen der ersten Horizontalebene und der zweiten Horizontalebene, wobei die beiden ersten Schenkel und/oder die beiden zweiten Schenkel und/oder die beiden Basen den Abstand zwischen der ersten Horizontalebene und der zweiten Horizontalebene durch zumindest teilweise Erstreckung in Richtung parallel zur Verstellachse zumindest teilweise überbrücken.

In einer speziellen Weiterbildung verlaufen die beiden Basen auf einer gemeinsamen dritten Horizontalebene, welche zwischen der ersten Horizontalebene und der zweiten Horizontalebene liegt und zu welcher die Verstellachse eine Flächennormale bildet. In anderen Worten verläuft die dritte Horizontalebene parallel zu den anderen Horizontalebenen und ist in einer speziellen Weiterbildung der Erfindung mittig zwischen der ersten Horizontalebene und der zweiten Horizontalebene angeordnet. Da die Basen auf der dritten Horizontalebene liegen, erstrecken sie sich bei dieser Erfindungsvariante nicht entlang der Verstellachse und tragen zu der genannten Überbrückung des Abstands der Hauptabschnitte in Richtung parallel zur Verstellachse nicht bei. In einer alternativen Variante liegen die Basen jedoch auf keiner Horizontalebene. Die beiden Basen überbrücken den Abstand zwischen der ersten Horizontalebene und der zweiten Horizontalebene hingehen teilweise, indem sie jeweils als ein sich insbesondere im Wesentlichen parallel zu der Verstellachse erstreckendes Segment einer Helix ausgebildet sind.

Die beiden ersten Krümmungsabschnitte der ersten Dichtfläche können auf der ersten Hauptfläche und die beiden zweiten Krümmungsabschnitte auf der zweiten Hauptfläche verlaufen. In diesem Fall überbrücken die Krümmungsabschnitte den Versatz der Hauptabschnitte in Richtung parallel zur Verstellachse nicht. Es ist jedoch auch möglich, dass die Krümmungsabschnitte nicht nur um eine Krümmungsachse, die parallel zu der Verstellachse verläuft, gekrümmt sind, wie oben bereits beschrieben, sondern auch um eine Krümmungsachse, die quer zur Verstellachse liegt. In diesem Fall wird die erste Dichtfläche auch nach innen in Richtung zum gegenüberliegenden Abschnitt der ersten Dichtfläche gekrümmt. Somit erstrecken sich die beiden ersten Krümmungsabschnitte und die beiden zweiten Krümmungsabschnitte zwischen der ersten Horizontalebene und der zweiten Horizontalebene, wobei die beiden ersten Krümmungsabschnitte und die beiden zweiten Krümmungsabschnitte den Abstand zwischen der ersten Horizontalebene und der zweiten Horizontalebene teilweise überbrücken. Die beschrieben Krümmung kann beispielsweise dadurch erreicht werden, indem die beiden ersten Krümmungsabschnitte und die beiden zweiten Krümmungsabschnitte als ein sich im Wesentlichen parallel zu der Verstellachse erstreckendes Segment einer Helix ausgebildet sind.

Ausserdem umfasst der zweite Aspekt der Erfindung ein Verschlussglied, insbesondere des eingangs beschriebenen erfindungsgemässen Vakuumventils. Da die Merkmale des Verschlussglieds bereits in Zusammenhang mit dem Vakuumventil und dessen unterschiedlichen erfindungsgemässen Weiterbildungen direkt oder indirekt beschrieben wurde, wird auf die oben gemachten Ausführungen verwiesen.

Allgemein umfasst das Verschlussglied zum gasdichten Schliessen eines Fliesswegs mittels einer Linearbewegung eine geometrische Verstellachse in einer Verschlussgliedfläche und eine zweite Dichtfläche, die sich aus unterschiedlich geformten, jeweils zu der Verstellachse nichtparallelen Abschnitten zusammensetzt. Die Flächennormalen der Abschnitte der zweiten Dichtfläche weisen zu der Verstellachse jeweils parallele Richtungskomponenten auf. Somit weist die zweite Dichtfläche senkrecht oder schräg in eine Öffnungsrichtung der Verstellachse. Ein erster Hauptabschnitt der zweiten Dichtfläche verläuft im Wesentlichen entlang einer geometrischen ersten Hauptfläche, während ein zweiter Hauptabschnitt der zweiten Dichtfläche im Wesentlichen entlang einer geometrischen zweiten Hauptfläche verläuft. Die erste Hauptfläche und die zweite Hauptfläche sind zueinander beabstandet und verlaufen parallel zu der Verstellachse und im Wesentlichen parallel zu der Verschlussgliedfläche. Somit weisen der erste Hauptabschnitt und der gegenüberliegende zweite Hauptabschnitt zueinander einen geometrischen Versatz quer zu der Verstellachse auf. Zwischen den beiden gegenüberliegenden Hauptabschnitten ist eine - in einer besonderen Ausführungsform insbesondere im Wesentlichen parallel zu der Verschlussgliedfläche verlaufende - Verschlussfläche des Verschlussgliedes angeordnet. Ein seitlicher erster U-förmiger Seitenabschnitt der zweiten Dichtfläche verbindet den ersten Hauptabschnitt und den zweiten Hauptabschnitt auf der einen Seite der zweiten Dichtfläche, während ein seitlicher zweiter U-förmiger Seitenabschnitt der zweiten Dichtfläche den ersten Hauptabschnitt und den zweiten Hauptabschnitt auf der anderen Seite der zweiten Dichtfläche verbindet. Der erste U-förmige Seitenabschnitt und der zweite U-förmige Seitenabschnitt setzen sich jeweils aus einem ersten Schenkel, der dem ersten Hauptabschnitt zugeordnet ist, einem zweiten Schenkel, der dem zweiten Hauptabschnitt zugeordnet ist, und einer Basis zusammen. Die beiden ersten Schenkel verlaufen jeweils im Wesentlichen entlang ersten Schenkelebenen, die zu der Verstellachse parallel liegen. Der erste Schenkel und der zweite Schenkel haben zueinander einen geometrischen Versatz quer zu der Verstellachse, wobei die jeweilige Basis jeweils den ersten Schenkel und den zweiten Schenkel verbindet und den geometrischen Versatz quer zu der Verstellachse überbrückt. Mittels der zweiten Dichtfläche ist in einer geschlossenen Position des Verschlussglieds ein dichtender Kontakt mit einer ersten Dichtfläche eines Vakuumventils zum gasdichten Verschliessen einer Öffnung des Vakuumventils herstellbar, indem die zweite Dichtfläche linear auf die erste Dichtfläche in eine Schliessrichtung der Verstellachse gedrückt wird.

Wie auch im Falle des Vakuumventils, welches das beschriebene Verschlussglied aufweist, sind bei dem erfindungsgemässen Verschlussglied die beiden ersten Schenkelebenen jeweils um mindestens 15 Grad gegenüber der ersten Hauptfläche abgewinkelt. Zwischen dem ersten Hauptabschnitt und den beiden ersten Schenkeln ist jeweils ein erster Krümmungsabschnitt der zweiten Dichtfläche angeordnet. Die im ersten Hauptabschnitt entlang der ersten Hauptfläche verlaufende zweite Dichtfläche geht jeweils in die ersten Krümmungsabschnitte über, wobei der jeweilige Übergang von dem ersten Hauptabschnitt in den jeweiligen ersten Krümmungsabschnitt jeweils in einer geometrischen ersten Tangentialebene zu der ersten Hauptfläche erfolgt. Die beiden ersten Schenkelebenen sind jeweils um mindestens 15 Grad gegenüber der jeweiligen ersten Tangentialebene abgewinkelt. Die im ersten Hauptabschnitt entlang der ersten Hauptfläche verlaufende zweite Dichtfläche wird in dem ersten Krümmungsabschnitt aus der ersten Hauptfläche um die mindestens 15 Grad, insbesondere mittels einer geometrischen Krümmung, hinausgeführt, so dass die zweite Dichtfläche in die erste Schenkelebene übergeht.

Das Verschlussglied weist die gleichen Weiterbildungsvarianten auf, welche bereits in Zusammenhang mit dem Vakuumventil beschrieben wurden und auf welche hiermit verwiesen sei. Insbesondere umfasst eine Weiterbildung, dass die beiden zweiten Schenkel im Wesentlichen entlang zu der Verstellachse parallelen zweiten Schenkelebenen verlaufen und zwischen dem zweiten Hauptabschnitt und den beiden zweiten Schenkeln jeweils ein zweiter Krümmungsabschnitt der zweiten Dichtfläche angeordnet ist. Die im zweiten Hauptabschnitt entlang der zweiten Hauptfläche verlaufende zweite Dichtfläche geht jeweils in die zweiten Krümmungsabschnitte über, wobei der jeweilige Übergang von dem zweiten Hauptabschnitt in den jeweiligen zweiten Krümmungsabschnitt jeweils in einer geometrischen zweiten Tangentialebene zu der zweiten Hauptfläche erfolgt. Die beiden zweiten Schenkelebenen sind jeweils um mindestens 15 Grad gegenüber der jeweiligen zweiten Tangentialebene abgewinkelt. Die im zweiten Hauptabschnitt entlang der zweiten Hauptfläche verlaufende zweite Dichtfläche ist in dem zweiten Krümmungsabschnitt aus der zweiten Hauptfläche um die mindestens 15 Grad, insbesondere mittels einer geometrischen Krümmung, hinausgeführt und geht in dem zweiten Krümmungsabschnitt in die zweite Schenkelebene über. Ausserdem ist es möglich, dass die erste Schenkelebene und die zweite Schenkelebene des ersten U-förmigen Seitenabschnitts im Wesentlichen parallel zueinander und ausserdem die erste Schenkelebene und die zweite Schenkelebene des zweiten U-förmigen Seitenabschnitts im Wesentlichen parallel zueinander verlaufen.

Wie auch bei dem Vakuumventil kann die erste Hauptfläche von einer geometrischen Ebene, also einer ersten Hauptebene gebildet werden. In diesem Falle liegen die beiden ersten Tangentialebenen und die erste Hauptebene aufeinander, so dass die ersten Tangentialebenen von der ersten Hauptebene gebildet werden. Auch die zweite Hauptfläche kann von einer geometrischen Ebene, also einer zweiten Hauptebene gebildet werden, wobei die beiden zweiten Tangentialebenen und die zweite Hauptebene aufeinander liegen, so dass die zweiten Tangentialebenen von der zweiten Hauptebene gebildet werden. Ebenso ist es möglich, dass die Verschlussgliedfläche eine geometrische Ebene darstellt und somit eine Verschlussgliedebene ist. Sind alle beiden Hauptflächen somit Hauptebenen, verlaufen die beiden Hauptabschnitte jeweils auf einer Ebene. Die Hauptabschnitte müssen aber nicht zwangsläufig geometrisch exakt in der ersten Hauptebene bzw. der zweiten Hauptebene verlaufen. Es ist möglich, dass die Hauptabschnitte lediglich im Wesentlichen entlang der ersten bzw. zweiten Hauptebene, also geometrisch nicht exakt parallel zur jeweiligen Hauptebene, beispielsweise als Bogen entlang der jeweiligen Hauptebene, verlaufen.

Wie bereits in Zusammenhang mit dem Vakuumventil erläutert ist es für gewisse Anwendungen jedoch von Vorteil, wenn anstelle eines Ventils mit einem ebenen Grundquerschnitt ein Ventil mit einem gebogenen Grundquerschnitt eingesetzt wird. In diesem Falle hat das Verschlussglied keine ebene Tellerform mit einer ebenen Verschlussgliedebene, sondern eine um eine zumindest in einem Teilabschnitt um eine zur Verstellachse im Wesentlichen parallele Krümmungsachse gekrümmte Grundform. Daher sieht ein weiterer Aspekt der Erfindung vor, dass die erste Hauptfläche, die zweite Hauptfläche und die Verschlussgliedfläche zumindest in einem Teilabschnitt, insbesondere in mehreren Teilabschnitte oder im gesamten Bereich um eine zur Verstellachse im Wesentlichen parallele Krümmungsachse gekrümmt sind. Die Krümmung zumindest in diesem Teilabschnitt kann von einer Kreiszylindermantelfläche gebildet werden oder eine sonstige Freiform haben. Insbesondere sind die erste Hauptfläche, die zweite Hauptfläche und die Verschlussgliedfläche zumindest in dem Teilabschnitt um die zur Verstellachse im Wesentlichen parallele Krümmungsachse um mindestens 15 Grad, insbesondere um mindestens 30 Grad, insbesondere um mindestens 45 Grad, insbesondere zwischen 45 Grad und 105 Grad, gekrümmt. Wie auch im Falle des Vakuumventils ist es möglich, dass die Krümmung um mehrere Krümmungsachsen und in unterschiedliche Krümmungsrichtungen, beispielsweise in Form einer gewellten Krümmung, erfolgt. Der Radius der Krümmung kann grösser oder kleiner als die Breite oder gleich der Breite der Öffnung sein. Der Radius kann auch derart klein sein, dass die Krümmung einen Knick darstellt. In einer besonderen Ausführungsform der Erfindung schneidet die Krümmungsachse die Öffnungsachse, insbesondere mit einem Schnittwinkel von etwa 90 Grad.

Weiterbildungen, die bereits in Zusammenhang mit dem Vakuumventil beschrieben wurden, werden ebenfalls von der Erfindung, die das Verschlussglied betrifft, umfasst und es wird auf die obigen Ausführungen verwiesen.

Die erfindungsgemässen Vakuumventile und die erfindungsgemässen Verschlussglieder werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.

Im Einzelnen zeigen:
- Figur 1a: ein Ventilgehäuse einer ersten Ausführungsform des Vakuumventils in einer Schrägansicht im Halbschnitt;
- Figur 1b: das Ventilgehäuse in einem seitlichen Querschnitt;
- Figur 2a: ein Verschlussglied der ersten Ausführungsform des Vakuumventils mit einer ebenen Hauptfläche in einer Draufsicht;
- Figur 2b: das Verschlussglied in einer Frontansicht;
- Figur 2c: das Verschlussglied in einer Seitenansicht;
- Figur 2d: das Verschlussglied in einer Schrägansicht;
- Figur 2e: einen Abschnitt des Verschlussglieds in einer Detail-Draufsicht;
- Figur 2f: eine erste gekrümmte Variante eines Verschlussglieds mit einer in einer ersten Richtung gekrümmten Hauptfläche in einer Draufsicht;
- Figur 2g: eine zweite gekrümmte Variante eines Verschlussglieds mit einer in einer zweiten Richtung gekrümmten Hauptfläche in einer Draufsicht; Figur 3a die erste Ausführungsform des erfindungsgemässe Vakuumventils mit dem Verschlussglied in geschlossener Position in einer Frontansicht;
- Figur 3a: die erste Ausführungsform des erfindungsgemässen Vakuumventils mit dem Verschlussglied in geschlossener Position in einer Frontansicht;
- Figur 3b: das Vakuumventil aus Figur 3a in einem seitlichen Querschnitt;
- Figur 3c: die erste Ausführungsform des erfindungsgemässen Vakuumventils mit dem Verschlussglied in offener Position in einer Frontansicht;
- Figur 3d: das Vakuumventil aus Figur 3c in einem seitlichen Querschnitt;
- Figur 3e: die erste Ausführungsform des erfindungsgemässe Vakuumventils mit dem Verschlussglied in geschlossener Position in einer Schrägansicht;
- Figur 4a: eine zweite Ausführungsform des erfindungsgemässen Vakuumventils mit dem Verschlussglied in offener Position in einem seitlichen Querschnitt;
- Figur 4b: ein Ventilgehäuse der zweiten Ausführungsform des erfindungsgemässen Vakuumventils in einer Schrägansicht im Halbschnitt;
- Figur 5a: ein erfindungsgemässes Verschlussglied der zweiten Ausführungsform des erfindungsgemässen Vakuumventils in einer Draufsicht;
- Figur 5b: das Verschlussglied in einer Frontansicht;
- Figur 5c: das Verschlussglied in einer Seitenansicht;
- Figur 5d: das Verschlussglied in einer Schrägansicht;
- Figur 5e: einen Abschnitt des Verschlussglieds in einer Detail-Draufsicht;
- Figur 6a: ein Ventilgehäuse und ein Verschlussglied mit Schrägflächen in einem seitlichen Querschnitt in einer Ausführungsform ohne elastische Zusatzdichtung;
- Figur 6b: ein Ventilgehäuse und ein Verschlussglied mit Schrägflächen in einem seitlichen Querschnitt in einer Ausführungsform mit einem O-Ring mit kreisförmigem Querschnitt;
- Figur 6c: ein Ventilgehäuse und ein Verschlussglied mit Schrägflächen in einem seitlichen Querschnitt in einer Ausführungsform mit einem Schirmungsschild;
- Figur 6d: ein Ventilgehäuse und ein Verschlussglied mit Schrägflächen in einem seitlichen Querschnitt in
- Figur 6e: einer Ausführungsform mit einem O-Ring mit nierenförmigem Querschnitt; ein Ventilgehäuse und ein Verschlussglied mit Schrägflächen in einem seitlichen Querschnitt in einer Ausführungsform mit einem O-Ring mit X-förmigem Querschnitt;
- Figur 6f: ein Ventilgehäuse und ein Verschlussglied mit Schrägflächen in einem seitlichen Querschnitt in einer Ausführungsform mit einem O-Ring mit kreisförmigem Querschnitt auf dem Ventilgehäuse;
- Figur 7a: das Verschlussglied aus Figur 6a in einer Schrägansicht;
- Figur 7b: das Verschlussglied aus Figur 6b in einer Schrägansicht;
- Figur 7c: das Verschlussglied aus Figur 6c in einer Schrägansicht;
- Figur 7d: das Verschlussglied aus Figur 6d in einer Schrägansicht;
- Figur 7e: das Verschlussglied aus Figur 6e in einer Schrägansicht;
- Figur 8a: ein aus dem Stand der Technik bekanntes Ventilgehäuse eines Vakuumschiebers; und
- Figur 8b: ein aus dem Stand der Technik bekanntes Verschlussglied eines Vakuumschiebers.

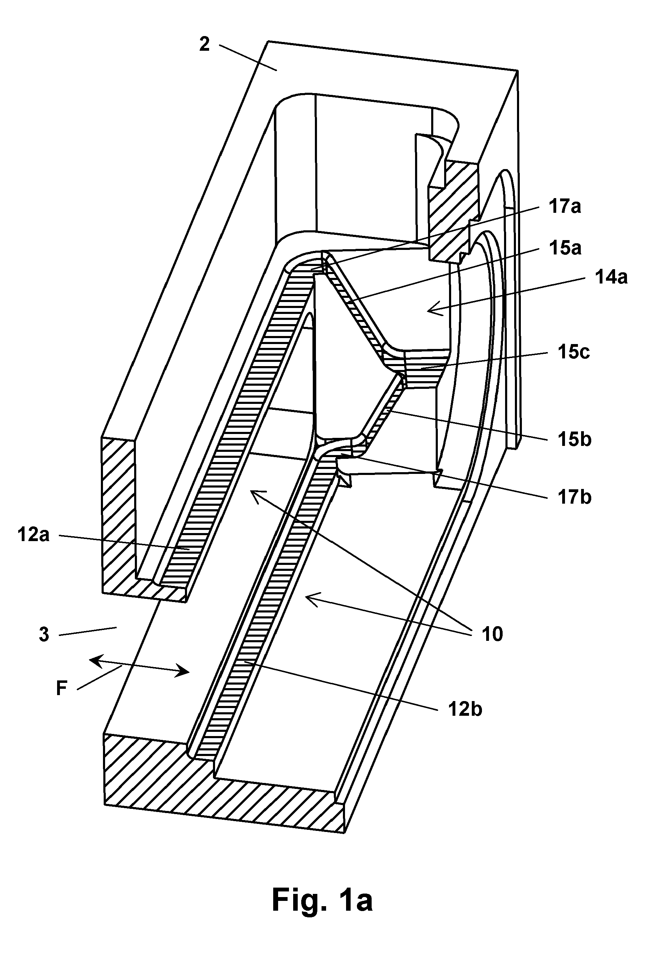

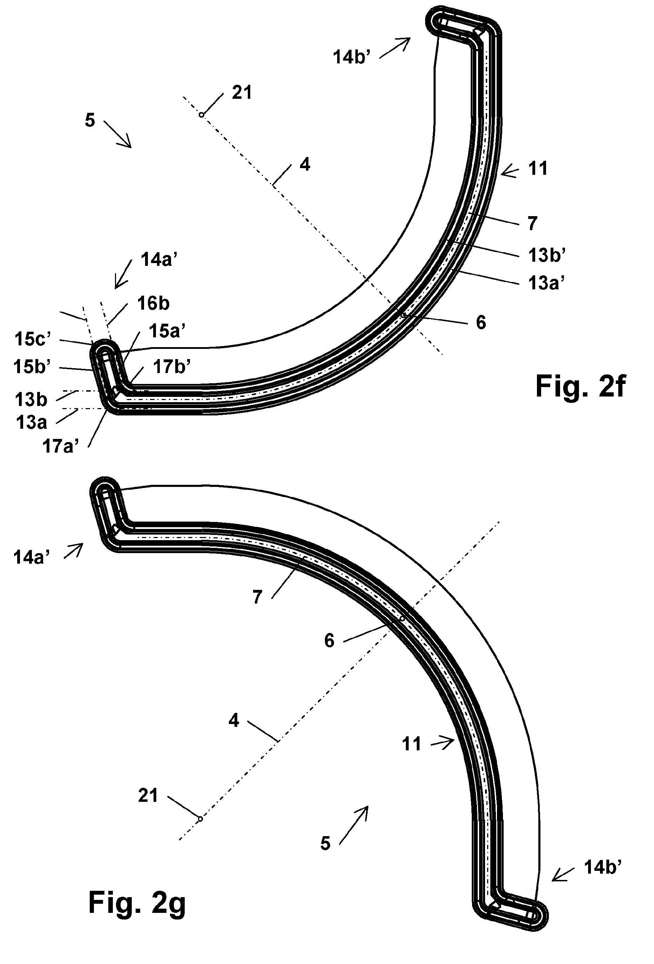

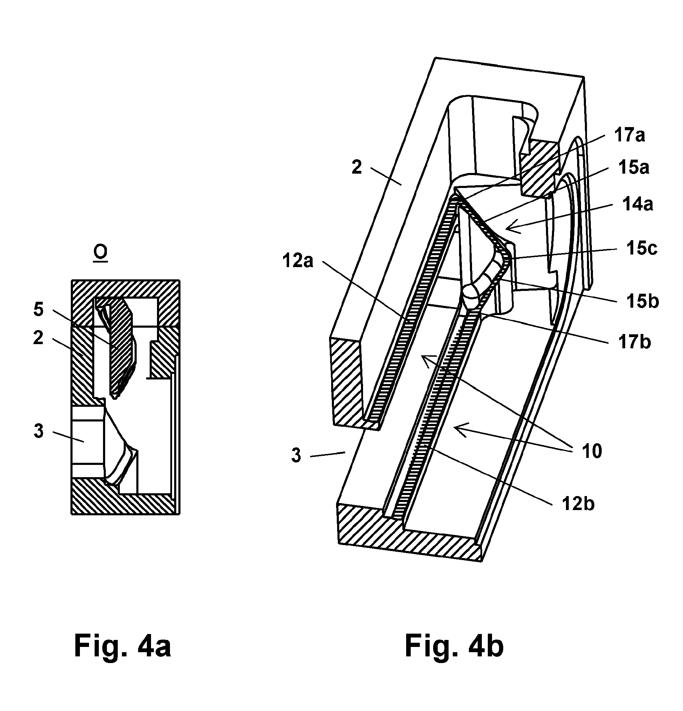

Die Figuren 1a bis 2e, 3a bis 3e und die Figuren 4a bis 5e zeigen jeweils eine gemeinsame, exemplarische Ausführungsform eines erfindungsgemässen Vakuumventils bzw. eines Verschlussglieds in unterschiedlichen Zuständen, aus unterschiedlichen Ansichten und in unterschiedlichen Detaillierungsgraden. Daher werden diese Figurengruppen jeweils gemeinsam beschrieben. Die Varianten gemäss den Figuren 2f und 2g sowie das Ausführungsbeispiel gemäss Figuren 4a bis 5e unterscheidet sich lediglich bezüglich bestimmter Merkmale von dem Ausführungsbeispiel gemäss den Figuren 1a bis 2e, 3a bis 3e, weshalb teilweise nur auf die Unterschiede der Varianten und Ausführungsformen eingegangen wird. Zum Teil wird auf bereits in vorangegangenen Figuren erläuterte Bezugszeichen und Merkmale nicht erneut eingegangen. Auf die Figuren 8a und 8b wurde bereits in Zusammenhang mit der Darstellung des Standes der Technik eingegangen.

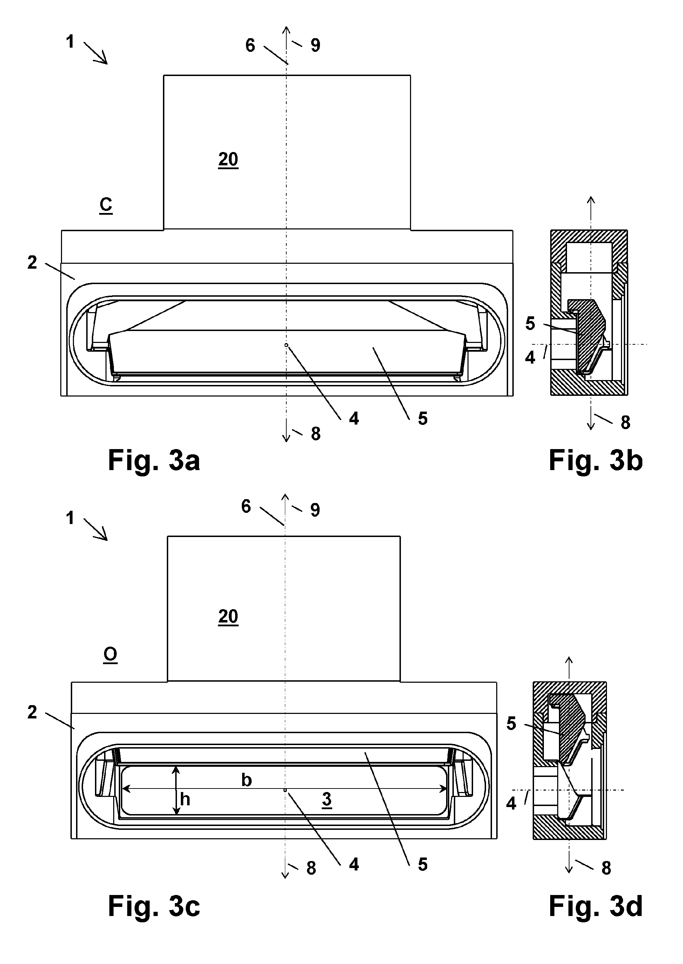

In den Figuren 1a bis 2e, 3a bis 3e ist eine erste Ausführungsform des Vakuumventils 1 und dessen Verschlussglieds 5 dargestellt. Mittels des Vakuumventils 1 kann ein Fliessweg F, der durch eine Öffnung 3 eines Ventilgehäuses 2 führt, mittels einer Linearbewegung des Verschlussgliedes 5 gasdicht verschlossen werden. In dem Ventilgehäuse 2 ist die Öffnung 3 für den Fliessweg F in Form eines rechteckigen Durchgangs aufgeformt, wobei die Breite b der Öffnung 3 im gezeigten Ausführungsbeispiel etwa das Sechsfache der Höhe h der Öffnung 3 beträgt, wie in Figur 3c gezeigt. Das Vakuumventil 1 ist als ein Transferventil ausgebildet.

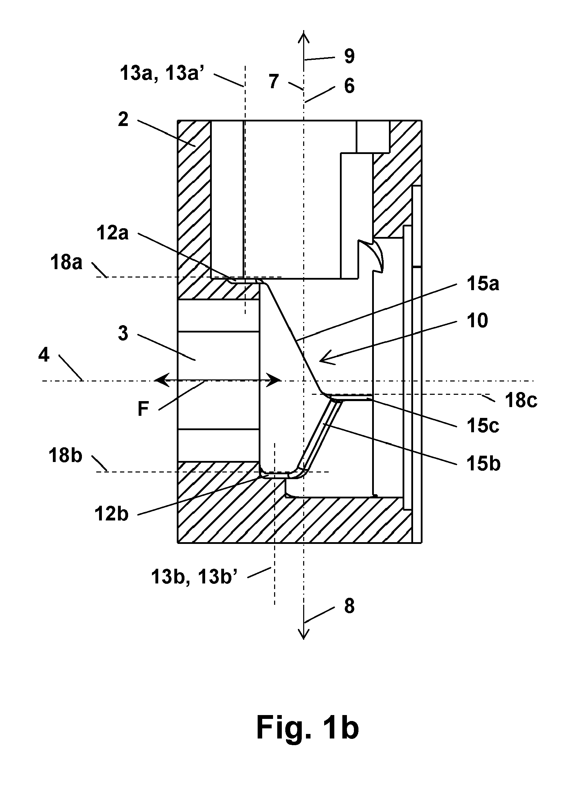

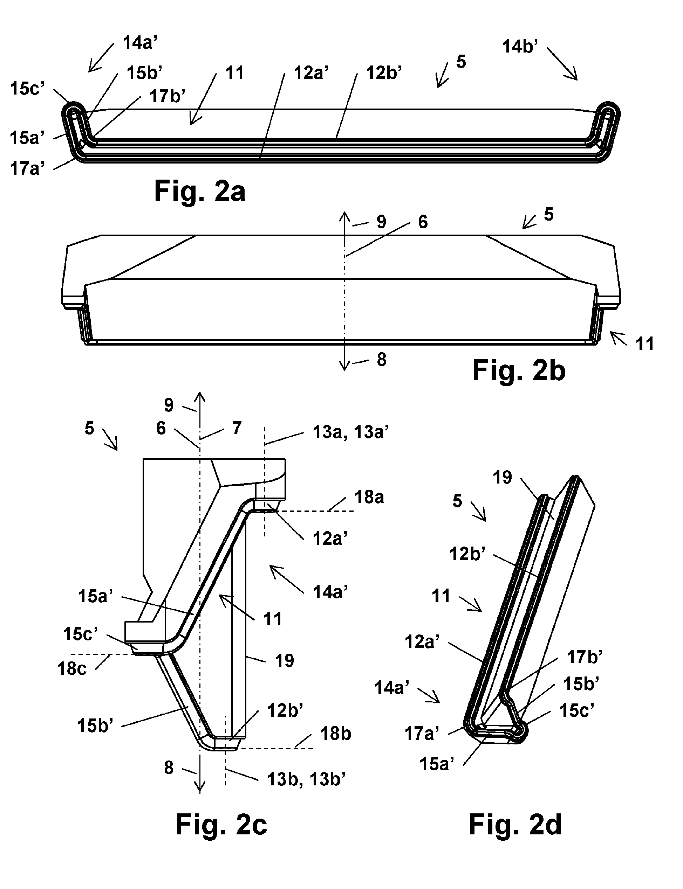

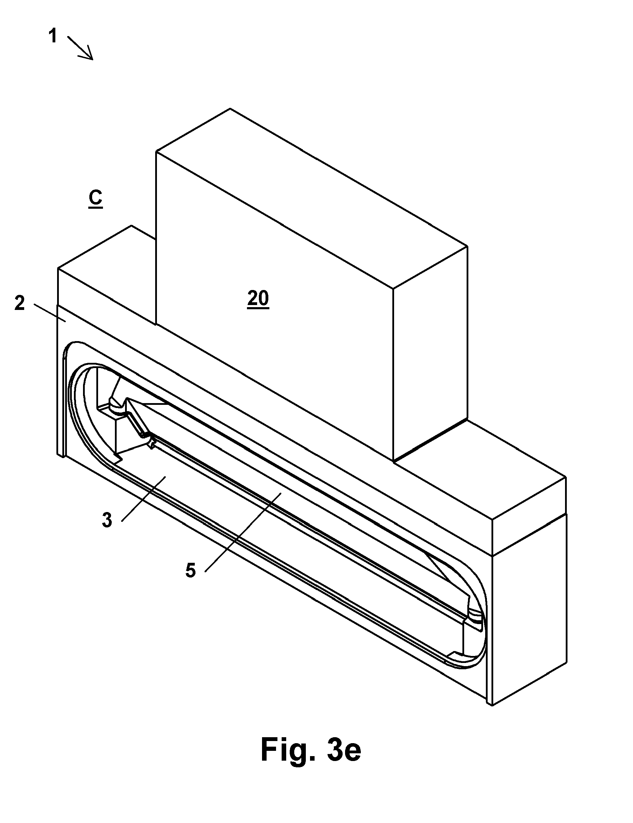

Durch die Öffnung 3 entlang des Fliesswegs F läuft eine geometrische Öffnungsachse 4, die sich entlang des Verlaufs der Öffnung 3 durch das Ventilgehäuse 2 mittig erstreckt, wie in Figur 1b gezeigt. Wie in den Figuren 3a bis 3e gezeigt, ist das im Ventilgehäuse 2 angeordnete Verschlussglied 5 in Form eines Ventiltellers linear entlang einer geometrischen Verstellachse 6 verstellbar. Die Verstellachse 6 verläuft quer, nämlich senkrecht zu der Öffnungsachse 4 in einer Verschlussgliedfläche 7, die von einer Verschlussgliedebene gebildet wird und die in den Figuren 1b und 2c mittels der Strichpunktlinie dargestellt ist. Das Verschlussglied 5 ist mittels eines Antriebs 20 von einer geöffneten Position O, in welcher die Öffnung 3 freigegeben ist, wie in den Figuren 3c und 3d gezeigt, in eine über die Öffnung 3 linear geschobene, geschlossene Position C, wie in den Figuren 3a, 3b und 3e veranschaulicht, in eine Schliessrichtung 8 linear entlang der Verstellachse 6 verschiebbar. Durch lineares Verschieben des Verschlussgliedes 5 in die entgegengesetzte Öffnungsrichtung 9 kann es von der geschlossenen Position C zurück in die geöffnete Position O linear verschoben werden.

Die Öffnung 3 des Ventilgehäuses 2 wird von einer zumindest teilweise gekrümmten ersten Dichtfläche 10 des Ventilgehäuses 2 umschlossen, wie in der Figur 1a anhand der gestrichelten Fläche gezeigt. Das Verschlussglied 5 hat eine zu dieser ersten Dichtfläche 10 korrespondierende zweite Dichtfläche 11, die eine der ersten Dichtfläche 10 entsprechende Form hat, wie in den Figuren 2a bis 2e dargestellt.

Wie in den Figuren 3a und 3b gezeigt, besteht zwischen der zweiten Dichtfläche 11 und der ersten Dichtfläche 10 in der geschlossenen Position C ein gasdichter Kontakt, indem die zweite Dichtfläche 11 in Schliessrichtung 8 auf die erste Dichtfläche 10 gedrückt wird, so dass das Verschlussglied 5 mit seiner Verschlussfläche 19 die Öffnung 3 gasdicht verschliesst. Der dichtende Kontakt wird beispielsweise ermöglicht, indem eine der beiden Dichtfläche als elastische Dichtung, beispielsweise als O-Ring oder aufvulkanisiert Dichtung ausgebildet ist oder eine solche Dichtung trägt. Diese Dichtung kann entweder auf dem Verschlussglied 5, wie in den Figuren gezeigt, oder auf dem Ventilgehäuse 2 angeordnet sein. In anderen Worten kann entweder die erste Dichtfläche 10 die Dichtung und die zweite Dichtfläche 11 den Ventilsitz, auf welchem die Dichtfläche gasdichtend aufliegen kann, bilden, oder umgekehrt. Unterschiedliche Dichtmaterialen und Dichtungstypen sind aus dem Stand der Technik bekannt um müssen an dieser Stelle nicht weiter erläutert werden.

Die erste Dichtfläche 10 des Ventilgehäuses 2 setzt sich aus unterschiedlich geformten, jeweils zu der Verstellachse 6 nichtparallelen Abschnitten 12a, 12b, 14a, 14b, 17a, 17b zusammen, wie im Folgenden detaillierter erläutert. Die Flächennormalen all dieser Abschnitte 12a, 12b, 14a, 14b, 17a, 17b der ersten Dichtfläche 10 haben zu der Verstellachse 6 jeweils parallele Richtungskomponenten. Somit weist die erste Dichtfläche 10 senkrecht oder schräg in die Öffnungsrichtung 9, wie aus der Figuren 1a und 1b ersichtlich. In den Figuren weist die gesamte erste Dichtfläche 10 somit nach oben.

Auch die zweite Dichtfläche 11 des Verschlussgliedes besitzt unterschiedlich geformte, jeweils zu der Verstellachse 6 nichtparallelen Abschnitte 12a', 12b', 14a', 14b', 17a', 17b', die den Abschnitten 12a, 12b, 14a, 14b, 17a, 17b der ersten Dichtfläche 10 entsprechen, wie in den Figuren 2a bis 2e gezeigt. Auch die Flächennormalen dieser Abschnitte 12a', 12b', 14a', 14b', 17a', 17b' der zweiten Dichtfläche 11 haben zu der Verstellachse 6 jeweils parallele Richtungskomponenten, so dass die zweite Dichtfläche 11 senkrecht oder schräg in eine Öffnungsrichtung 9 der Verstellachse 6 weist. Im gezeigten Ausführungsbeispiel weist also die zweite Dichtfläche 11 nach unten.

Die erste Dichtfläche 10 setzt sich entlang ihres Verlaufs aus einem ersten Hauptabschnitt 12a, einem ersten Krümmungsabschnitt 17a, einem ersten U-förmigen Seitenabschnitt 14a, der wiederum einen ersten Schenkel 15a, eine Basis 15c und einen zweiten Schenkel 15b beinhaltet, einen zweiten Krümmungsabschnitt 17b, einen zweiten Hauptabschnitt 12b, einen weiteren zweiten Krümmungsabschnitt 17b, einen zweiten U-förmigen Seitenabschnitt 14b, der wiederum einen zweiten Schenkel 15b, eine Basis 15c und einen ersten Schenkel 15a beinhaltet, und einen weiteren ersten Krümmungsabschnitt 17a, der wiederum mit dem anderen Ende des ersten Hauptabschnitts 12a verbunden ist, zusammen, wie in Figur 1a gezeigt.

Entsprechend der ersten Dichtfläche 10 setzt sich auch die zweite Dichtfläche 11 des Verschlussgliedes 5 entlang ihres Verlaufs aus einem ersten Hauptabschnitt 12a', einem ersten Krümmungsabschnitt 17a', einem ersten U-förmigen Seitenabschnitt 14a', der wiederum einen ersten Schenkel 15a', eine Basis 15c' und einen zweiten Schenkel 15b' beinhaltet, einen zweiten Krümmungsabschnitt 17b', einen zweiten Hauptabschnitt 12b', einen weiteren zweiten Krümmungsabschnitt 17b', einen zweiten U-förmigen Seitenabschnitt 14b', der wiederum einen zweiten Schenkel 15b', eine Basis 15c' und einen ersten Schenkel 15a' beinhaltet, und einen weiteren ersten Krümmungsabschnitt 17a', der wiederum mit dem anderen Ende des ersten Hauptabschnitts 12a' verbunden ist, zusammen, wie in den Figuren 2a bis 2e dargestellt. Da die Abschnitte einander entsprechen, werden im Folgenden zum Teil nur die Abschnitte der ersten Dichtfläche 10 genauer erläutert.

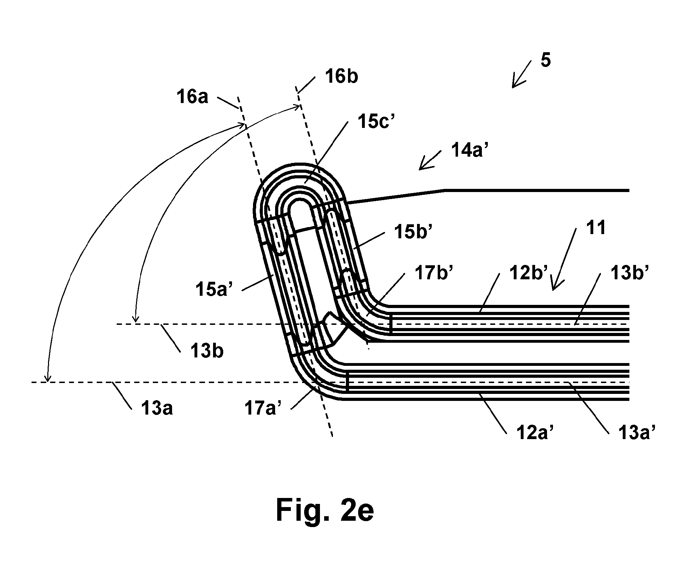

Der erste Hauptabschnitt 12a der ersten Dichtfläche 10 und der erste Hauptabschnitt 12a der zweiten Dichtfläche 11 verlaufen im Wesentlichen entlang einer geometrischen ebenen ersten Hauptfläche 13a', wie in den Figuren 1b bzw. 2c und 2e gezeigt. Auch der zweite Hauptabschnitt 12b der ersten Dichtfläche 10 und der zweite Hauptabschnitt 12b' der zweiten Dichtfläche 11 erstrecken sich im Wesentlichen entlang einer geometrischen ebenen zweiten Hauptfläche 13b'. Die erste Hauptfläche 13a' und die zweite Hauptfläche 13b' liegen parallel zueinander und haben einen Abstand. Sie verlaufen parallel zu der ebenen Verschlussgliedfläche 7. Der erste Hauptabschnitt 12a bzw. 12a' und der gegenüberliegende zweite Hauptabschnitt 12b bzw. 12b' haben zueinander einen geometrischen Versatz quer zu der Verstellachse 6, wie in den Figuren 1a und 1b bzw. 2a, 2c, 2d und 2e gezeigt. Zwischen den beiden gegenüberliegenden Hauptabschnitten 12a und 12b der ersten Dichtfläche 10 liegt die Öffnung 3, Figur 1a, und zwischen den beiden gegenüberliegenden Hauptabschnitten 12a' und 12b' der zweiten Dichtfläche 11 die Verschlussfläche 19 des Verschlussgliedes 5, Figuren 2c und 2d.

Der seitliche erste U-förmige Seitenabschnitt 14a der ersten Dichtfläche 10 bzw. der seitliche erste U-förmige Seitenabschnitt 14a' der zweiten Dichtfläche 11 verbindet den ersten Hauptabschnitt 12a bzw. 12a' und den zweiten Hauptabschnitt 12b bzw. 12b' auf der einen Seite der jeweiligen Dichtfläche 10 bzw. 11, während der seitliche zweite U-förmige Seitenabschnitt 14b der ersten Dichtfläche 10 bzw. der seitliche zweite U-förmige Seitenabschnitt 14b' der zweiten Dichtfläche 11 den ersten Hauptabschnitt 12a bzw. 12a' und den zweiten Hauptabschnitt 12b bzw. 12b' auf der einen Seite der jeweiligen Dichtfläche 10 bzw. 11 verbindet, wie in den Figuren 1a bzw. 2a dargestellt.

Der erste U-förmige Seitenabschnitt 14a bzw. 14a' und der zweite U-förmige Seitenabschnitt 14b bzw. 14b' haben jeweils den ersten Schenkel 15a bzw. 15a', der dem ersten Hauptabschnitt 12a bzw. 12a' zugeordnet ist, und den dem zweiten Hauptabschnitt 12b bzw. 12b' zugeordneten zweiten Schenkel 15b bzw. 15b', sowie die Basis 15c bzw. 15c', die als Bogen ausgebildet ist. Die beiden ersten Schenkel 15a bzw. 15a' auf der einen Seite und der anderen Seite der jeweiligen Dichtfläche verlaufen jeweils im Wesentlichen entlang zu ersten Schenkelebenen 16a, die zu der Verstellachse 6 parallel liegen. Eine der beiden ersten Schenkelebene 16a ist in Figur 2e in Form der gestichtelten Linie dargestellt.

Auch die beiden zweiten Schenkel 15b bzw. 15b' erstrecken sich im Wesentlichen entlang zweiter Schenkelebenen 16b, die zu der Verstellachse 6 parallel verlaufen, wie ebenfalls in Figur 2e gezeigt. Wie dort erkennbar, verlaufen die erste Schenkelebene 16a und die zweite Schenkelebene 16b sowohl des ersten U-förmigen Seitenabschnitts 14a bzw. 14a', als auch des zweiten U-förmigen Seitenabschnitts 14b bzw. 14b' im Wesentlichen parallel zueinander. Der erste Schenkel 15a bzw. 15a' und der zweite Schenkel 15b bzw. 15b' haben somit zueinander einen geometrischen Versatz quer zu der Verstellachse 6. Die jeweilige bogenförmige Basis 15c bzw. 15c' verbindet jeweils den ersten Schenkel 15a bzw. 15a' und den zweiten Schenkel 15b bzw. 15b' miteinander und überbrückt den geometrischen Versatz quer zu der Verstellachse 6.

Zwischen dem ersten Hauptabschnitt 12a bzw. 12a' und den beiden ersten Schenkeln 15a bzw. 15a' ist jeweils der erste Krümmungsabschnitt 17a bzw. 17a' der ersten Dichtfläche 10 bzw. der zweiten Dichtfläche 11 angeordnet. Die im ersten Hauptabschnitt 12a bzw. 12a' entlang der ersten Hauptfläche 13a' verlaufende erste Dichtfläche 10 bzw. zweite Dichtfläche 11 geht jeweils in die ersten Krümmungsabschnitte 17a bzw. 17a' über, wobei der jeweilige Übergang von dem ersten Hauptabschnitt 12a bzw. 12a' in den jeweiligen ersten Krümmungsabschnitt 17a bzw. 17a' an beiden Enden des ersten Hauptabschnitts 12a bzw. 12a' jeweils in einer geometrischen ersten Tangentialebene 13a zu der ersten Hauptfläche 13a' erfolgt. Die beiden ersten Schenkelebenen 16a sind jeweils um mindestens 15 Grad, nämlich im gezeigten Ausführungsbeispiel um 70 Grad gegenüber der jeweiligen ersten Tangentialebene abgewinkelt, wie insbesondere in Figur 2a und 2e gezeigt. In diesem jeweiligen ersten Krümmungsabschnitt 17a bzw. 17a', der im gezeigten Aufführungsbeispiel bogenförmig ist, wird somit die im ersten Hauptabschnitt 12a bzw. 12a' entlang der erste Hauptfläche 13a' verlaufende Dichtfläche 10 bzw. 11 aus der ersten Hauptfläche 13a' um über 15 Grad, nämlich im gezeigten Ausführungsbeispiel um die genannten 70 Grad mittels einer geometrischen Krümmung hinausgeführt und geht in die erste Schenkelebene 16a über, wie in Figur 2e veranschaulicht. Auch zwischen dem zweiten Hauptabschnitt 12b bzw. 12b' und den beiden zweiten Schenkeln 15b bzw. 15b' ist jeweils der zweite Krümmungsabschnitt 17b bzw. 17b' der ersten Dichtfläche 10 bzw. der zweiten Dichtfläche 11 angeordnet. Die im zweiten Hauptabschnitt 12b bzw. 12b' entlang der zweiten Hauptfläche 13b' verlaufende erste bzw. zweite Dichtfläche 10 bzw. 11 geht jeweils an den Enden des zweiten Hauptabschnitts 12b bzw. 12b' in die zweiten Krümmungsabschnitte 17b bzw. 17b' über, wobei der jeweilige Übergang von dem zweiten Hauptabschnitt 12b bzw. 12b in den jeweiligen zweiten Krümmungsabschnitt 17b bzw. 17b' jeweils in einer geometrischen zweiten Tangentialebene 13b zu der zweiten Hauptfläche 13b' erfolgt. Die beiden zweiten Schenkelebenen 16b sind jeweils um über 15 Grad, nämlich um 70 Grad gegenüber der jeweiligen zweiten Tangentialebene 13b abgewinkelt. Die im zweiten Hauptabschnitt 12b bzw. 12b' entlang der zweiten Hauptfläche 13b verlaufende Dichtfläche 10 bzw. 11 ist somit aus der zweiten Hauptfläche 13b' um die genannten 70 Grad mittels der geometrischen Krümmung hinausgeführt, so dass die Dichtfläche 10 bzw. 11 in die zweite Schenkelebene 16b übergeht.

In Figur 2e ist der jeweilige Klappwinkel anhand der gebogenen Winkelpfeile veranschaulicht. In anderen Worten sind die Seitenabschnitte 14a, 14a', 14b, 14b' jeweils um etwa 70 Grad um jeweils eine geometrische Klappachse, die parallel zu der Verstellachse 6 verläuft, nach innen aufeinander zu geklappt, wie beispielsweise in Figur 2a gezeigt.

Im Ausführungsbeispiel, das in den Figuren 1a bis 2e, 3a bis 3e und die Figuren 4a bis 5e gezeigt ist, werden die erste Hauptfläche 13a', die zweite Hauptfläche 13b' und die Verschlussgliedfläche 7 von drei parallelen Ebenen gebildet, weshalb die beiden ersten Tangentialebenen 13a mit der ersten Hauptfläche 13a' zusammenfallen und die beiden zweiten Tangentialebenen 13b mit der zweiten Hauptfläche 13b' zusammenfallen, wie in den Figuren 1b, 2c und 2e gezeigt. Eine Variante der Erfindung sieht jedoch vor, dass die erste Hauptfläche 13a', die zweite Hauptfläche 13b' und die Verschlussgliedfläche 7 zumindest in einem Teilabschnitt um eine zur Verstellachse 6 im Wesentlichen parallele Krümmungsachse 21 gekrümmt sind, wie in den Figuren 2f und 2g in einer Draufsicht auf ein Verschlussglied gezeigt. Im Gegensatz zu dem vorangegangenen Ausführungsbeispiel liegen hier die Tangentialebenen 13a bzw. 13b und die dazugehörige Hauptfläche 13a' bzw. 13b' nicht aufeinander, da die Hauptflächen 13a' bzw. 13b' keine Ebenen sondern im einem Teilabschnitt um eine Krümmungsachse 21 gekrümmte Zylindermantelflächenabschnitte sind, wie in den Figuren 2f und 2g gezeigt. In den beiden gezeigten Varianten schneiden sich die Öffnungsachse 4 und die Krümmungsachse 21 mit einem Schnittwinkel von 90 Grad. Ausserdem schneiden sich die Öffnungsachse 4 und die Verstellachse 6 mit einem Schnittwinkel von 90 Grad, wobei die Verstellachse 6 und die Krümmungsachse 21 parallel zueinander verlaufen. In der in Figur 2f gezeigten Variante sind die Schenkel 15a' und 15b' auf diejenige Seite, in welcher die Hauptflächen 13a' und 13b' gekrümmt sind und auf welcher die die Krümmungsachse 21 liegt, geklappt. Hingegen sind in der in Figur 2g gezeigten Variante die Schenkel 15a' und 15b' auf diejenige Seite geklappt, welche der Seite, in welcher die Hauptflächen 13a' und 13b' gekrümmt sind und auf welcher die die Krümmungsachse 21 liegt, gegenüberliegt. Der Übergang der zweiten Dichtfläche 11 von dem ersten Hauptabschnitt 12a' in den ersten Krümmungsabschnitt 17a aus der ersten Hauptfläche 13a' heraus erfolgt jeweils in der ersten Tangentialebene 13a, während der Übergang der zweiten Dichtfläche 11 vom dem zweiten Hauptabschnitt 12b' in den zweiten Krümmungsabschnitt 17b aus der zweiten Hauptfläche 13b' heraus jeweils in der zweiten Tangentialebene 13b stattfindet, wie in Figur 2f gezeigt. Der Krümmungswinkel ergibt sich im vorliegenden Beispiel aus dem Schnittwinkel der beiden ersten Tangentialebenen und dem Schnittwinkel der beiden zweiten Tangentialebenen. Diese beiden Schnittwinkel sind im vorliegenden Fall identisch und betragen 90 Grad. Es ist jedoch auch möglich, dass die Schnittwinkel unterschiedlich gross sind. Die restlichen Merkmale der in den Figuren 2f und 2g gezeigten Varianten, insbesondere die Merkmale des ersten U-förmigen Seitenabschnitts 14a' und des zweiten U-förmigen Seitenabschnitts 14b' entsprechen denen des vorangegangenen Ausführungsbeispiels und brauchen nicht gesondert erläutert werden. Die in Zusammenhang mit den Figuren 2f und 2g gezeigten Merkmale der zweiten Dichtfläche 11 des Verschlussglieds 5 entsprechen den Merkmalen der mit der zweiten Dichtfläche 11 korrespondierenden ersten Dichtfläche 10 des Ventilgehäuses 2 und sind entsprechend übertragbar, weshalb eine gesonderte Erläuterung dieser korrespondierenden Merkmale entfallen kann.

Für die gezeigten Varianten gemeinsam gilt, dass die ersten und zweiten Hauptabschnitte 12a, 12a', 12b und 12b' jeweils zueinander nicht nur einen geometrischen Versatz quer zu der Verstellachse 6 haben, der mittels der U-förmigen Seitenabschnitte 14a, 14a', 14b und 14b, im Speziellen mittels der Basen 15c bzw. 15c' überbrückt wird, sondern auch einen geometrischen Versatz in Richtung parallel zur Verstellachse 6. In diesem Bereich erstreckt sich die Öffnung 3 bzw. die Verschlussfläche 19. Im Folgenden wir die Überbrückung dieses Bereich beschrieben.

Der erste Hauptabschnitt 12a bzw. 12a' verläuft bei dem Ausführungsbeispiel gemäss den Figuren 1a bis 2e, 3a bis 3e und die Figuren 4a bis 5e geradlinig und bei den Varianten gemäss den Figuren 2f und 2g gekrümmt auf einer ersten Horizontalebene 18a, zu welcher die Verstellachse 6 eine Flächennormale bildet, wie in den Figuren 1b bzw. 2c gezeigt. Auch der zweite Hauptabschnitt 12b bzw. 12b' erstreckt sich bei dem Ausführungsbeispiel gemäss den Figuren 1a bis 2e, 3a bis 3e und die Figuren 4a bis 5e geradlinig und bei den Varianten gemäss den Figuren 2f und 2g gekrümmt auf einer zweiten Horizontalebene 18b, zu welcher die Verstellachse 6 ebenfalls eine Flächennormale bildet. Die erste Horizontalebene 18a und die zweite Horizontalebene 18b sind zueinander parallel und zueinander beabstandet, Figuren 1b bzw. 2c. Die beiden ersten Schenkel 15a bzw. 15a', die beiden zweiten Schenkel 15b bzw. 15b' und die beiden Basen 15c bzw. 15c' erstrecken sich zwischen der ersten Horizontalebene 18a und der zweiten Horizontalebene 18b. Die beiden als Bögen ausgebildeten Basen 15c bzw. 15c' liegen auf einer gemeinsamen dritten Horizontalebene 18c, welche mittig zwischen der ersten Horizontalebene 18a und der zweiten Horizontalebene 18b verläuft. Auch zu der dritten Horizontalebene 18c bildet die Verstellachse 6 eine Flächennormale. Die drei Horizontalebenen 18a, 18b und 18c sind parallel.

Auch die die beiden ersten Krümmungsabschnitte 17a bzw. 17a' liegen auf der ersten Horizontalebene 18a. Ausserdem verlaufen die beiden zweiten Krümmungsabschnitte 17b bzw. 17b' auf der zweiten Horizontalebene 18b, wie in den Figuren 1a und 1b bzw. 2c und 2d dargestellt. Im ersten Ausführungsbeispiel verlaufen also ausser den Schenkeln 15a und 15b bzw. 15a' und 15b' alle Abschnitte der Dichtflächen 10 bzw. 11 auf Horizontalebenen 18a, 18b und 18c und können den Versatz in Richtung parallel zur Verstellachse 6 nicht überbrücken. Daher erstrecken sich die beiden ersten Schenkel 15a bzw. 15a' und die beiden zweiten Schenkel 15b bzw. 15b' schräg in Richtung der Verstellachse 6 und überbrücken somit den Abstand zwischen der ersten Horizontalebene 18a und der zweiten Horizontalebene 18b, wie in den Figuren 1a und 1b bzw. 2b und 2d erkennbar. Diese Überbrückung ist in Richtung parallel zur Verstellachse 6 in Hinblick auf die Belastung der Dichtung besonders kritisch, da die Dichtung beim Verpressen in der geschlossenen Position C in diesem Abschnitt im Gegensatz zu allen anderen Abschnitten, die in Horizontalebenen 18a, 18b und 18c verlaufen, nicht nur senkrecht belastet wird, sondern beim Verpressen der Dichtung auch in Längsrichtung. Zwar ist die Belastung in Längsrichtung unkritischer als eine Belastung in Querrichtung, die bei der erfindungsgemässen Dichtgeometrie gänzlich vermeidbar ist, jedoch sollte eine übermässige Längsbelastung vermieden werden. Der Überbrückungswinkel sollte daher nicht zu steil sein. Aufgrund der abgewinkelten Seitenabschnitte kann dieser Winkel in Richtung der Verstellachse 6 verhältnismässig klein sein, wie in den Figuren 1b und 2c gezeigt. Dadurch vergrössert sich zwar die Längserstreckung dieses Übergangbereichs, jedoch wirkt sich dies nur geringfügig auf die Breite des Vakuumventils aus, wie auch in Figur 2a gezeigt, da sich der Übergangsbereich aufgrund der eingeklappten Seitenabschnitte vor allem in Richtung parallel zur Öffnungsachse 4 erstreckt. Somit wird das Vakuumventil 1 und das Verschlussglied 5 zwar etwas tiefer, jedoch im Verhältnis zur Öffnungsbreite b schmäler. Durch die Tiefenzunahme der Dichtgeometrie wird eine Zunahme der Steifigkeit des Vakuumventils 1 und dessen Verschlussglied 5 erreicht.

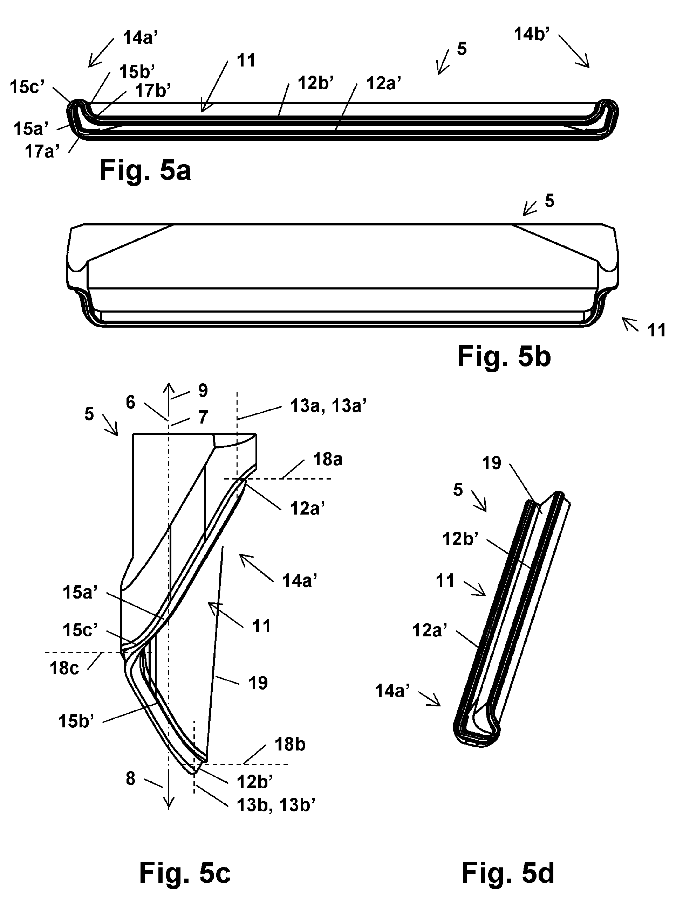

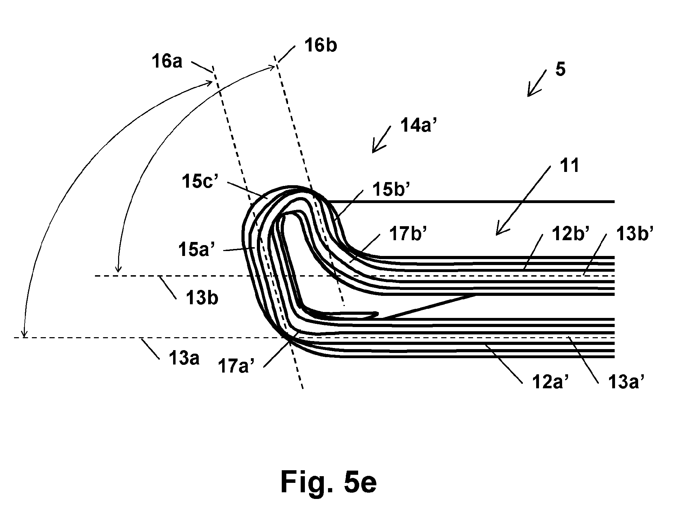

Während beim ersten Ausführungsbeispiel die Krümmungsabschnitte 17a, 17a', 17b und 17b' und die Basen 15c und 15c' auf den Horizontalebenen 18a, 18b bzw. 18c liegen, sich somit nicht parallel zu der Verstellachse 6 erstrecken und den Abstand zwischen den Hauptabschnitten 12a und 12b bzw. 12a' und 12b' in Richtung parallel zur Verstellachse 6 nicht überbrücken, erstrecken sich im zweiten Ausführungsbeispiel gemäss den Figuren 4a bis 5e auch diese Abschnitte in Richtung parallel zur Verstellachse 6. Wie in den Figuren 4a und 4b bzw. 5c und 5d gezeigt, überbrücken die beiden Basen 15c den Abstand zwischen der ersten Horizontalebene 18a und der zweiten Horizontalebene 18b teilweise, indem sie jeweils als ein sich im Wesentlichen parallel zu der Verstellachse 6 erstreckendes Segment einer Helix ausgebildet sind. Die Basen 15c bzw. 15c' gehen in die Schenkel 15a, 15a', 15b bzw. 15b' über, die als leicht verdrehte und verwundete Geraden ausgebildet sind, Figur 5e. Die ersten Schenkel 15a bzw. 15a' gehen in die beiden ersten Krümmungsabschnitte 17a bzw. 17a über, die sich zwischen der ersten Horizontalebene 18a und der dritten Horizontalebene 18c erstrecken, während die zweiten Schenkel 15b bzw. 15b' in die beiden zweiten Krümmungsabschnitte 17b bzw. 17b übergehen, die sich zwischen der zweiten Horizontalebene 18b und der dritten Horizontalebene 18c erstrecken, wie in den Figuren 4b und 5c veranschaulicht. Die beiden ersten Krümmungsabschnitte 17a bzw. 17a' und die beiden zweiten Krümmungsabschnitte 17b bzw. 17b' sind jeweils als ein sich im Wesentlichen parallel zu der Verstellachse 6 erstreckendes Segment einer Helix ausgebildet, wie in den Figuren 4a, 4b, 5a, 5b, 5c, 5d und 5e gezeigt. Somit überbrücken die beiden ersten Krümmungsabschnitte 17a bzw. 17a' und die beiden zweiten Krümmungsabschnitte 17b bzw. 17b' den Abstand zwischen der ersten Horizontalebene 18a und der zweiten Horizontalebene 18b und zwischen dem ersten Hauptabschnitt 12a bzw. 12a' und dem zweiten Hauptabschnitt 12b bzw. 12b' teilweise. Die restlichen Merkmale des zweiten Ausführungsbeispiels entsprechen im Wesentlichen denen des ersten Ausführungsbeispiels, weshalb auf die entsprechenden obigen Ausführungen verwiesen sei.

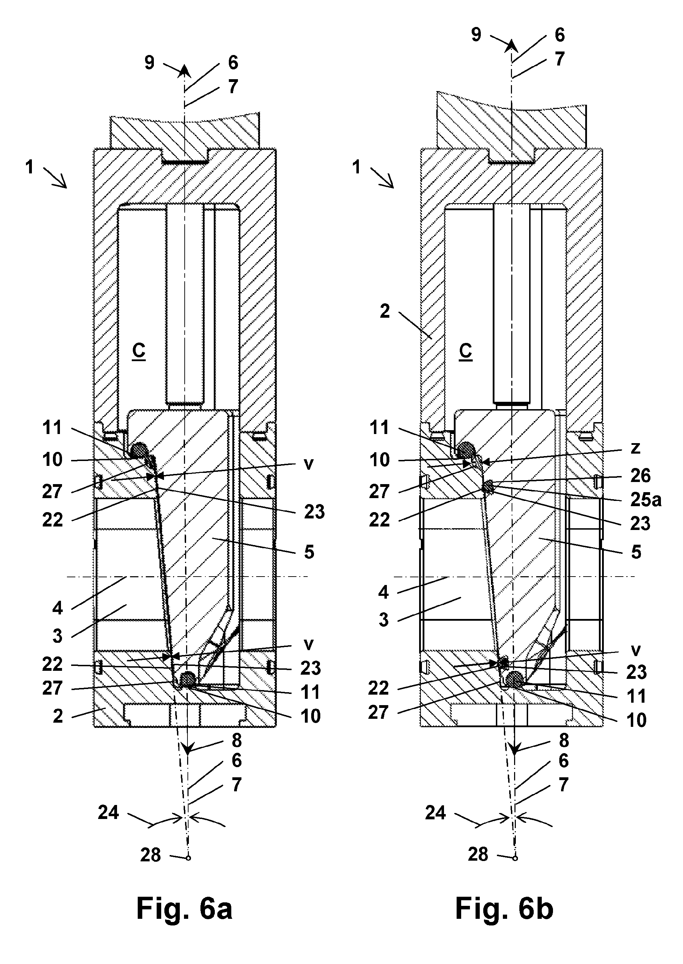

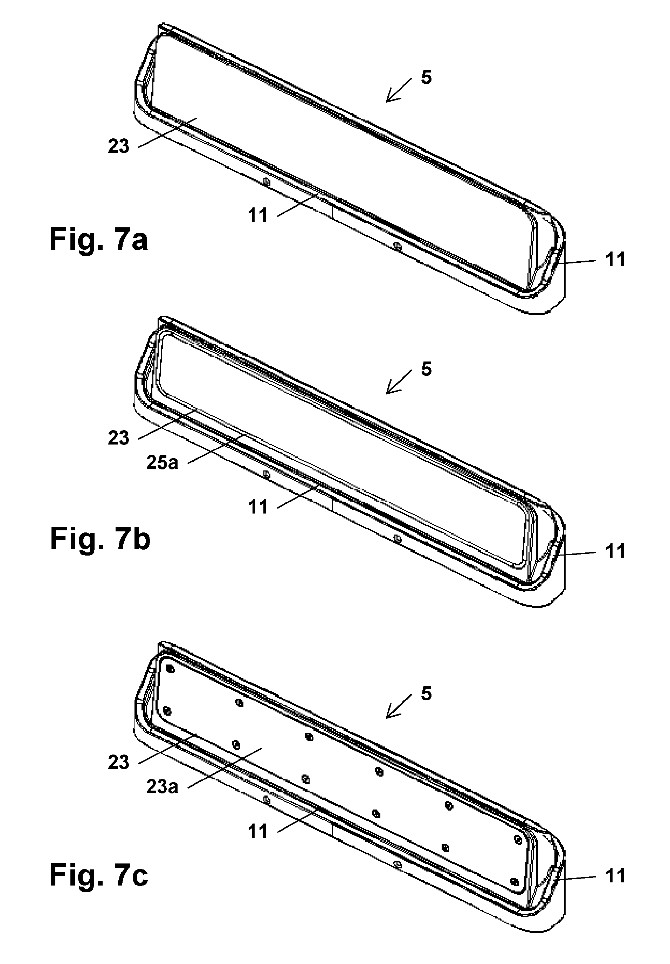

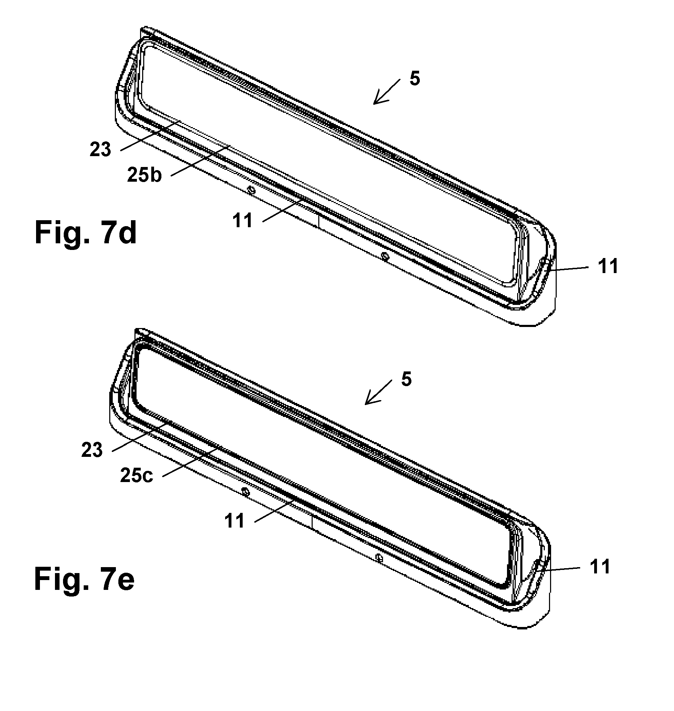

In den Figuren 6a bis 7e sind gemäss dem ersten Aspekt der Erfindung weitergebildete Varianten des zweiten Ausführungsbeispiels aus den Figuren 4a bis 5e dargestellt. Im Folgenden wird zum Teil lediglich auf die zu den vorangegangenen Ausführungsbeispielen differierenden Merkmale eingegangen.

Das Vakuumventil 1 gemäss den Figuren 6a bis 7e besitzt, wie auch die vorangegangenen Ausführungsbeispiele, das Ventilgehäuse 2 mit der Öffnung 3 für den Fliessweg F und der geometrischen Öffnungsachse 4. Das Verschlussglied 5 ist linear entlang der zu der Öffnungsachse 4 quer verlaufenden, geometrischen Verstellachse 6 in der Verschlussgliedfläche 7 von einer die Öffnung 3 freigebenden, geöffneten Position O, vergleiche Figur 4a, in die über die Öffnung 3 linear geschobene, geschlossene Position C in die Schliessrichtung 8 und umgekehrt zurück in die Öffnungsrichtung 9 verschiebbar. Das Ventilgehäuse 2 besitzt die zumindest teilweise gekrümmte erste Dichtfläche 10, welche die Öffnung 3 umschliesst. Die mit der ersten Dichtfläche 10 korrespondierende, eine der ersten Dichtfläche 10 entsprechende Form aufweisende zweite Dichtfläche 11 ist auf dem Verschlussglied 5 in Form einer aufvulkanisierten elastischen Dichtung angeordnet, wie in den Figuren 6a bis 7e gezeigt. Die erste Dichtfläche 10 setzt aus unterschiedlich geformten, jeweils zu der Verstellachse 6 nichtparallelen Abschnitten zusammen, die senkrecht oder schräg in die Öffnungsrichtung 9 weisen. Die zweite Dichtfläche 11 steht in der geschlossenen Position C in einem auf die erste Dichtfläche 10 in die Schliessrichtung 8 drückenden, dichtenden Kontakt mit der ersten Dichtfläche 10, wie in den Figuren 6a bis 6f gezeigt. Das Verschlussglied 5 verschliesst somit die Öffnung 3 auf gasdichte Weise.

Den Varianten aus den Figuren 6a bis 7e ist gemein, dass das Ventilgehäuse 2 im rahmenförmigen Bereich zwischen der Öffnung 3 und der ersten Dichtfläche 10 eine die Öffnung 3 rahmenartig umschliessende erste Schrägfläche 22 aufweist. Das Verschlussglied 5 hat eine parallel zu der ersten Schrägfläche 22 verlaufende zweite Schrägfläche 23, die mit der ersten Schrägfläche 22 korrespondiert und eine der ersten Schrägfläche 22 entsprechende Form aufweist. Die erste Schrägfläche 22 und die zweite Schrägfläche 23 stehen jeweils mit einem Schrägstellungswinkel 24 gegenüber der Verschlussgliedfläche 7 derart schräg, dass die erste Schrägfläche 22 schräg in die Öffnungsrichtung 9 und die zweite Schrägfläche 23 schräg in die Schliessrichtung 8 weist. Die erste Schrägfläche 22 und die zweite Schrägfläche 23 werden in ihren geometrischen Verlängerungen, welche anhand der Strichpunktlinie veranschaulicht sind, von der geometrischen Verstellachse 6 mit dem Schrägstellungswinkel 24 geschnitten werden. Die Verschlussgliedfläche 7 schneidet sich mit der erste Schrägfläche 22 und der zweiten Schrägfläche 23 in den Schnittlinien 28, welche aufgrund des geringen Abstands der parallelen Schrägflächen 22 und 23 als eine gemeinsame Schnittlinie 28 dargestellt ist. Diese Schnittlinien 28 verlaufen zueinander parallel und sind aufgrund der ebenen Ausgestaltung der Hauptflächen geometrische Geraden. Es ist jedoch auch möglich, dass die Hauptflächen, wie insbesondere in den Figuren 2f und 2g gezeigt, gekrümmte Flächen sind und somit auch die Schrägflächen 22 und 23, welche im gezeigten Ausführungsbeispiel geometrische Ebenen sind, von gekrümmten Flächen gebildet werden, wobei in letzterem Fall die Schnittlinien 28 Kurven sind.

Im gezeigten Ausführungsbeispiel beträgt der Schrägstellungswinkel 24 etwa 5 Grad. Die erste Schrägfläche 22 und die zweite Schrägfläche 23 liegen in den Varianten gemäss den Figuren 6a bis 7e derart zueinander, dass die zweite Schrägfläche 23 in der geschlossenen Position C des Verschlussglieds 5 in paralleler Gegenüberlage zu der ersten Schrägfläche 22 angeordnet ist, wobei der Abstand v zwischen den Schrägflächen 22 und 23 zueinander in der Variante gemäss Figur 6a grösser 0,05 mm, aber kleiner 0,6 mm ist, während der Abstand v bei den Varianten gemäss den Figuren 6b bis 6f gleich 0 ist, so dass sich die beiden Schrägflächen berühren.

In der Variante gemäss Figur 6a sind die erste Schrägfläche 22 und die zweite Schrägfläche 23 als nicht-elastische Metallflächen ausgebildet. Der Abstand v in der geschlossenen Position C des Verschlussglieds 5 beträgt zwischen 0,05 mm und 0,6 mm, wie in der Figur 6a veranschaulicht, so dass es zu keinem Kontakt zwischen den Schrägflächen 22 und 23 kommt und eine Entstehung von Reibpartikeln vermieden wird. Aufgrund des geringen Abstand v zwischen den Schrägflächen 22 und 23 in der geschlossenen Position C wirkt dieser kleine Spalt wie eine Barriere und verhindert ein unmittelbares Auftreffen eines aggressiven Mediums aus dem Bereich der Öffnung 4 auf die Dichtflächen 10 oder 11.

Um ein Vordringen des Mediums zu den Dichtflächen 10 und 11 zusätzlich zu verhindern, weisen das Ventilgehäuse 2 und das Verschlussglied 5 im Bereich zwischen der ersten Schrägfläche 22 und der ersten Dichtfläche 10 bei allen Varianten gemäss den Figuren 6a bis 6f eine die erste Schrägfläche 22 umschliessende Ausnehmung 27 auf, die derart angeordnet und ausgestaltet ist, dass der Abstand z zwischen dem Ventilgehäuse 2 und dem Verschlussglied 5 im Bereich der Ausnehmung 27 mindestens 0,8 mm, insbesondere zwischen 0,8 mm und 6 mm, beträgt. Durch die hierdurch entstehenden Turbulenzen im Falle des Eindringens des Mediums in den Spalt zwischen den Schrägflächen 22 und 23 wird der Einfluss des Mediums auf die zweite Dichtung 11 weiter reduziert.

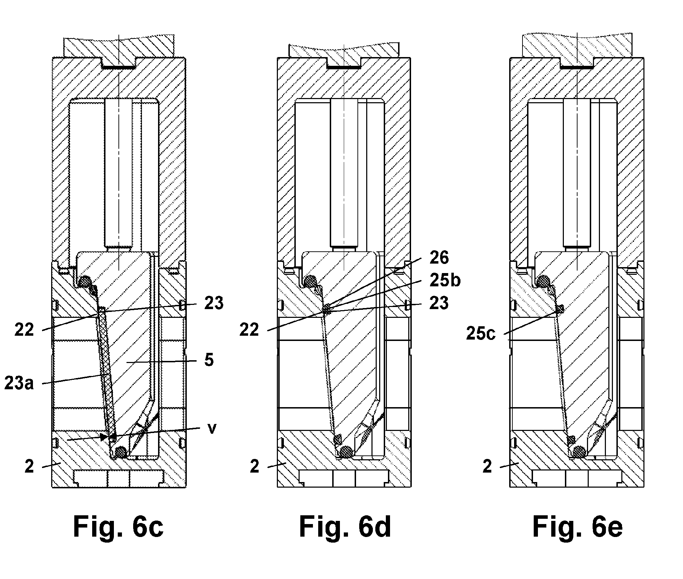

In Figur 6c ist eine Ausführungsform mit einem Hochfrequenzschirmungsschild dargestellt. Die erste Schrägfläche 22 ist als elektrisch leitende, mit dem Ventilgehäuse 1 bezüglich des elektrischen Potentials gekoppelte Metallfläche ausgebildet. Die zweite Schrägfläche 23 ist ein geschlossenes, elektrisch leitendes Schirmungsschild 23a, welches in der geschlossenen Position C die Öffnung 3 vollständig überdeckt und rings um die Öffnung 3 mit der ersten Schrägfläche 22 in elektrischem Kontakt zur potentiellen elektrischen Kopplung des Schirmungsschilds 23a mit dem Ventilgehäuse 1 steht, wie in der Figur 6c gezeigt. Zur Herstellung dieses elektrischen Kontakts ist der Abstand v in der geschlossenen Position C gleich 0, so dass ein elektrischer Kontakt zwischen der ersten Schrägfläche 22 und der zweiten Schrägfläche 23 besteht.

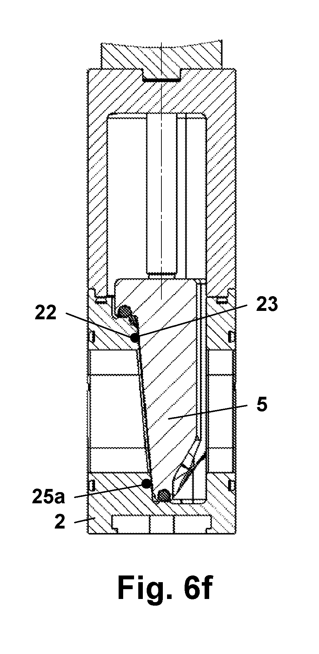

Bei den Varianten gemäss den Figuren 6b, 6d und 6e wird die zweite Schrägfläche 23 jeweils von einer elastischen Zusatzdichtung 25a, 25b bzw. 25c gebildet, während bei der Variante gemäss Figur 6f die ersten Schrägfläche 22 von der elastischen Zusatzdichtung 25a gebildet wird. Der Abstand v in der geschlossenen Position C des Verschlussglieds 5 ist jeweils gleich 0, so dass die elastische Zusatzdichtung 25a, 25b bzw. 25c die jeweils gegenüberliegenden Schrägfläche 22 bzw. 23 auf dichtende Weise berührt. Somit werden die erste und zweite Dichtfläche 10 und 11 weitgehend von dem im Bereich der Öffnung 3 vorhandenen Medium isoliert. Die elastische Zusatzdichtung 25a aus Figur 6b oder Figur 6f wird von einem in einer Nut 26 angeordneten O-Ring 25a mit einem kreisförmigen Querschnitt gebildet, während der Querschnitt des O-Rings 25b aus Figur 6d nierenförmig und der Querschnitt des O-Rings 25c aus Figur 6e X-förmig ist. Alternativ besteht die Möglichkeit, dass die elastische Zusatzdichtung 25a, 25b, 25c von einer auf dem Ventilgehäuse 2 und/oder auf dem Verschlussglied 5 aufvulkanisierten Dichtung gebildet wird.

Selbstverständlich ist es möglich, die einzelnen spezifischen Merkmale der beiden Erfindungsaspekte und der einzelnen Ausführungsbeispiele miteinander zu kombinieren. Ausserdem ist es möglich, die Merkmale des zweiten Ausführungsbeispiels mit denen des ersten Ausführungsbeispiels und dessen beiden Varianten eines gekrümmten Grundquerschnitts, und umgekehrt, zu kombinieren und beispielsweise lediglich eine oder mehrere der Basen und/oder einen oder mehrere der ersten Krümmungsabschnitte als überbrückende Abschnitte, insbesondere in Form eines Segments einer Helix, auszubilden. Anstelle einer Bogen- oder Helixgeometrie werden von der Erfindung auch andere zwei- oder zweidimensional erstreckende Geometrien erfasst, welche funktional den beschrieben Geometrien gleichen. Weiters lassen sich diese Kombinationen mit den Merkmalen der Varianten der Schrägflächen kombinieren.

## Patentansprüche

1. Vakuumventil (1) zum gasdichten Schliessen eines Fliesswegs (F) mittels einer Linearbewegung, mit
• einem Ventilgehäuse (2) mit einer Öffnung (3) für den Fliessweg (F), wobei die Öffnung (3) eine geometrische Öffnungsachse (4) entlang des Fliesswegs (F) aufweist,
• einem Verschlussglied (5), das linear entlang einer zu der Öffnungsachse (4) quer verlaufenden, geometrischen Verstellachse (6) in einer Verschlussgliedfläche (7) von
□ einer die Öffnung (3) freigebenden, geöffneten Position (O) in
□ eine über die Öffnung (3) linear geschobene, geschlossene Position (C) in eine Schliessrichtung (8)
und umgekehrt zurück in eine Öffnungsrichtung (9) verschiebbar ist,
• einer die Öffnung (3) umschliessenden, zumindest teilweise gekrümmten ersten Dichtfläche (10) des Ventilgehäuses (2) und
• einer mit der ersten Dichtfläche (10) korrespondierenden, eine der ersten Dichtfläche (10) entsprechende Form aufweisenden zweiten Dichtfläche (11) des Verschlussglieds (5),
wobei
• sich die erste Dichtfläche (10) aus unterschiedlich geformten, jeweils zu der Verstellachse (6) nichtparallelen Abschnitten (12a, 12b, 14a, 14b, 17a, 17b) zusammensetzt,
• die Flächennormalen der Abschnitte (12a, 12b, 14a, 14b, 17a, 17b) der ersten Dichtfläche (10) zu der Verstellachse (6) jeweils parallele Richtungskomponenten aufweisen und somit die erste Dichtfläche (10) senkrecht oder schräg in die Öffnungsrichtung (9) weist,
• ein erster Hauptabschnitt (12a) der ersten Dichtfläche (10) im Wesentlichen entlang einer geometrischen ersten Hauptfläche (13a') verläuft,
• ein zweiter Hauptabschnitt (12b) der ersten Dichtfläche (10) im Wesentlichen entlang einer geometrischen zweiten Hauptfläche (13b') verläuft,
• die erste Hauptfläche (13a') und die zweite Hauptfläche (13b') parallel zu der Verstellachse (6) verlaufen, zueinander beabstandet sind und im Wesentlichen parallel zu der Verschlussgliedfläche (7) verlaufen und somit der erste Hauptabschnitt (12a) und der gegenüberliegende zweite Hauptabschnitt (12b) zueinander einen geometrischen Versatz quer zu der Verstellachse (6) aufweisen,
• zwischen den beiden gegenüberliegenden Hauptabschnitten (12a, 12b) die Öffnung (3) angeordnet ist,
• ein seitlicher erster U-förmiger Seitenabschnitt (14a) der ersten Dichtfläche (10) den ersten Hauptabschnitt (12a) und den zweite Hauptabschnitt 12b) auf der einen Seite der ersten Dichtfläche (10) verbindet,
• ein seitlicher zweiter U-förmiger Seitenabschnitt (14b) der ersten Dichtfläche (10) den ersten Hauptabschnitt (12a) und den zweiten Hauptabschnitt (12b) auf der anderen Seite der ersten Dichtfläche (10) verbindet,
• der erste U-förmige Seitenabschnitt (14a) und der zweite U-förmige Seitenabschnitt (14b) jeweils einen dem ersten Hauptabschnitt (12a) zugeordneten ersten Schenkel (15a), einen dem zweiten Hauptabschnitt (12b) zugeordneten zweiten Schenkel (15b) und eine Basis (15c), die insbesondere als Bogen ausgebildet ist, aufweist,
• der erste Schenkel (15a) und der zweite Schenkel (15b) zueinander einen geometrischen Versatz quer zu der Verstellachse (6) aufweisen,
• die jeweilige Basis (15c) jeweils den ersten Schenkel (15a) und den zweiten Schenkel (15b) verbindet und den geometrischen Versatz quer zu der Verstellachse (6) überbrückt, und
• die zweite Dichtfläche (11) in der geschlossenen Position (C) in einem auf die erste Dichtfläche (10) in die Schliessrichtung (8) drückenden, dichtenden Kontakt mit der ersten Dichtfläche (10) steht und das Verschlussglied (5) die Öffnung (3) gasdicht verschliesst,
**dadurch gekennzeichnet, dass**
• das Ventilgehäuse (2) im Bereich zwischen der Öffnung (3) und der ersten Dichtfläche (10) eine die Öffnung (3) umschliessende erste Schrägfläche (22) aufweist,
• das Verschlussglied (5) eine parallel zu der ersten Schrägfläche (22) verlaufende, mit der ersten Schrägfläche (22) korrespondierende und eine der ersten Schrägfläche (22) entsprechende Form aufweisende zweite Schrägfläche (23) aufweist,
• die erste Schrägfläche (22) und die zweite Schrägfläche (23) jeweils mit einem Schrägstellungswinkel (24) gegenüber der Verschlussgliedfläche (7) derart schräg stehen, dass die erste Schrägfläche (22) schräg in die Öffnungsrichtung (9) weist und die erste Schrägfläche (22) und die zweite Schrägfläche (23) in ihren geometrischen Verlängerungen von der geometrischen Verstellachse (6) mit dem Schrägstellungswinkel (24) geschnitten werden,
• der Schrägstellungswinkel (24) zwischen 3 und 15 Grad beträgt und
• die erste Schrägfläche (22) und die zweite Schrägfläche (23) derart zueinander liegen, dass die zweite Schrägfläche (23) in der geschlossenen Position (C) des Verschlussglieds (5) in paralleler Gegenüberlage zu der ersten Schrägfläche (22) mit einem Abstand (v) zueinander zwischen 0 und 0,6 mm angeordnet ist.

2. Vakuumventil (1) nach Anspruch 1,
**dadurch gekennzeichnet, dass**
• die erste Schrägfläche (22) und die zweite Schrägfläche (23) nicht-elastisch ausgebildet sind und
• der Abstand (v) in der geschlossenen Position (C) des Verschlussglieds (5) zwischen 0,05 mm und 0,6 mm, insbesondere zwischen 0,05 mm und 0,3 mm beträgt.

3. Vakuumventil (1) nach Anspruch 2,
**dadurch gekennzeichnet, dass**
die erste Schrägfläche (22) und die zweite Schrägfläche (23) als Metallflächen ausgebildet sind.

4. Vakuumventil (1) nach Anspruch 1,
**dadurch gekennzeichnet, dass**
• die erste Schrägfläche (22) als elektrisch leitende, mit dem Ventilgehäuse (1) bezüglich des elektrischen Potentials gekoppelte Metallfläche ausgebildet ist,
• die zweite Schrägfläche (23) als geschlossenes, elektrisch leitendes Schirmungsschild (23a), welches in der geschlossenen Position (C) die Öffnung (3) vollständig überdeckt und rings um die Öffnung (3) mit der ersten Schrägfläche (22) in elektrischem Kontakt zur potentiellen elektrischen Kopplung des Schirmungsschilds (23a) mit dem Ventilgehäuse (1) steht, ausgebildet ist und
• der Abstand (v) in der geschlossenen Position (C) zur Herstellung des elektrischen Kontakts gleich 0 ist.

5. Vakuumventil (1) nach Anspruch 1,
**dadurch gekennzeichnet, dass**
• die erste Schrägfläche (22) und/oder die zweite Schrägfläche (23) von einer elastischen Zusatzdichtung (25a; 25b; 25c) gebildet wird und
• der Abstand (v) in der geschlossenen Position (C) des Verschlussglieds (5) gleich 0 ist.

6. Vakuumventil (1) nach Anspruch 5,
**dadurch gekennzeichnet, dass**
die elastische Zusatzdichtung (25a; 25b; 25c) von einem in einer Nut (26) angeordneten O-Ring, insbesondere mit einem kreisförmigen Querschnitt (25a), einem nierenförmigen Querschnitt (25b) oder einem X-förmigen Querschnitt (25c), gebildet wird.

7. Vakuumventil (1) nach Anspruch 5,
**dadurch gekennzeichnet, dass**
die elastische Zusatzdichtung (25a; 25b; 25c) von einer auf dem Ventilgehäuse (2) und/oder auf dem Verschlussglied (5) aufvulkanisierten Dichtung gebildet wird.

8. Vakuumventil (1) nach einem der Ansprüche 1 bis 7,
**dadurch gekennzeichnet, dass**
das Ventilgehäuse (2) und/oder das Verschlussglied (5) im Bereich zwischen der ersten Schrägfläche (22) und der ersten Dichtfläche (10) eine die erste Schrägfläche (22) umschliessende Ausnehmung (27) aufweist, die derart angeordnet und ausgestaltet ist, dass der Abstand (z) zwischen dem Ventilgehäuse (2) und dem Verschlussglied (5) im Bereich der Ausnehmung (27) mindestens 0,8 mm, insbesondere zwischen 0,8 mm und 6 mm, beträgt.

9. Vakuumventil (1) nach einem der Ansprüche 1 bis 8,
**dadurch gekennzeichnet, dass**
• die beiden ersten Schenkel (15a) jeweils im Wesentlichen entlang zu der Verstellachse (6) parallelen ersten Schenkelebenen (16a) verlaufen,
• die beiden zweiten Schenkel (15b) im Wesentlichen entlang zu der Verstellachse (6) parallelen zweiten Schenkelebenen (16b) verlaufen,
• die erste Hauptfläche (13a'), die zweite Hauptfläche (13b'), die Verschlussgliedfläche (7), die erste Schrägfläche (22) und die zweite Schrägfläche (23) jeweils von geometrischen Ebenen gebildet werden und
• die ersten Schenkelebenen (16a) auf der geometrischen Ebene der ersten Hauptfläche (13a') und die zweiten Schenkelebenen (16b) auf der geometrischen Ebene der zweiten Hauptfläche (13b') liegen.

10. Vakuumventil (1) nach einem der Ansprüche 1 bis 8,
**dadurch gekennzeichnet, dass**
• die beiden ersten Schenkel (15a) jeweils im Wesentlichen entlang zu der Verstellachse (6) parallelen ersten Schenkelebenen (16a) verlaufen,
• zwischen dem ersten Hauptabschnitt (12a) und den beiden ersten Schenkeln (15a) jeweils ein erster Krümmungsabschnitt (17a) der ersten Dichtfläche (10) angeordnet ist,
• die im ersten Hauptabschnitt (12a) entlang der ersten Hauptfläche (13a') verlaufende erste Dichtfläche (10) jeweils in die ersten Krümmungsabschnitte (17a) übergeht, wobei der jeweilige Übergang von dem ersten Hauptabschnitt (12a) in den jeweiligen ersten Krümmungsabschnitt (17a) jeweils in einer geometrischen ersten Tangentialebene (13a) zu der ersten Hauptfläche (13a') erfolgt,
• die beiden ersten Schenkelebenen (16a) jeweils um mindestens 15 Grad gegenüber der jeweiligen ersten Tangentialebene (13a) abgewinkelt sind und
• die im ersten Hauptabschnitt (12a) entlang der ersten Hauptfläche (13a') verlaufende erste Dichtfläche (10) in dem ersten Krümmungsabschnitt (17a) aus der ersten Hauptfläche (13a') um die mindestens 15 Grad, insbesondere mittels einer geometrischen Krümmung, hinausgeführt ist und in die erste Schenkelebene (16a) übergeht und
• insbesondere die erste Hauptfläche (13a'), die zweite Hauptfläche (13b') und die Verschlussgliedfläche (7) zumindest in einem Teilabschnitt um eine - insbesondere zur Verstellachse (6) im Wesentlichen parallele - Krümmungsachse (21) gekrümmt sind.

11. Verschlussglied (5) zum gasdichten Schliessen eines Fliesswegs (F) mittels einer Linearbewegung, insbesondere für ein Vakuumventil nach einem der Ansprüche 1 bis 10, mit
• einer geometrischen Verstellachse (6) in einer Verschlussgliedfläche (7) und
• einer zweiten Dichtfläche (11)
wobei
• sich die zweite Dichtfläche (10) aus unterschiedlich geformten, jeweils zu der Verstellachse (6) nichtparallelen Abschnitten (12a', 12b', 14a', 14b', 17a', 17b') zusammensetzt,
• die Flächennormalen der Abschnitte (12a', 12b', 14a', 14b', 17a', 17b') der zweiten Dichtfläche (11) zu der Verstellachse (6) jeweils parallele Richtungskomponenten aufweisen und somit die zweite Dichtfläche (11) senkrecht oder schräg in eine Öffnungsrichtung (9) der Verstellachse (6) weist,
• ein erster Hauptabschnitt (12a') der zweiten Dichtfläche (11) im Wesentlichen entlang einer geometrischen ersten Hauptfläche (13a') verläuft,
• ein zweiter Hauptabschnitt (12b') der zweiten Dichtfläche (11) im Wesentlichen entlang einer geometrischen zweiten Hauptfläche (13b') verläuft,
• die erste Hauptfläche (13a') und die zweite Hauptfläche (13b') parallel zu der Verstellachse (6) verlaufen, zueinander beabstandet sind und im Wesentlichen parallel zu der Verschlussgliedfläche (7) verlaufen und somit der erste Hauptabschnitt (12a') und der gegenüberliegende zweite Hauptabschnitt (12b') zueinander einen geometrischen Versatz quer zu der Verstellachse (6) aufweisen,
• ein seitlicher erster U-förmiger Seitenabschnitt (14a') der zweiten Dichtfläche (11) den ersten Hauptabschnitt (12a') und den zweiten Hauptabschnitt (12b') auf der einen Seite der zweiten Dichtfläche (11) verbindet,
• ein seitlicher zweiter U-förmiger Seitenabschnitt (14b') der zweiten Dichtfläche (11) den ersten Hauptabschnitt (12a') und den zweiten Hauptabschnitt (12b') auf der anderen Seite der zweiten Dichtfläche (11) verbindet,
• der erste U-förmige Seitenabschnitt (14a') und der zweite U-förmige Seitenabschnitt (14b') jeweils einen dem ersten Hauptabschnitt (12a') zugeordneten ersten Schenkel (15a'), einen dem zweiten Hauptabschnitt (12b') zugeordneten zweiten Schenkel (15b') und eine Basis (15c') aufweist,
• der erste Schenkel (15a') und der zweite Schenkel (15b') zueinander einen geometrischen Versatz quer zu der Verstellachse (6) aufweisen,
• die jeweilige Basis (15c') jeweils den ersten Schenkel (15a') und den zweiten Schenkel (15b') verbindet und den geometrischen Versatz quer zu der Verstellachse (6) überbrückt, und
• mittels der zweiten Dichtfläche (11) in einer geschlossenen Position (C) des Verschlussglieds (5) ein dichtender Kontakt mit einer ersten Dichtfläche (10) eines Vakuumventils (1) zum gasdichten Verschliessen einer Öffnung (3) des Vakuumventils (1) durch lineares Drücken der zweiten Dichtfläche (11) auf die erste Dichtfläche (10) in eine Schliessrichtung (8) der Verstellachse (6) herstellbar ist,
**dadurch gekennzeichnet, dass**
• im Bereich zwischen den Abschnitten (12a', 12b', 14a', 14b', 17a', 17b') der zweiten Dichtfläche (11) eine zweite Schrägfläche (23) des Verschlussgliedes (5) angeordnet ist,
• die zweite Schrägfläche (23) mit einem Schrägstellungswinkel (24) gegenüber der Verschlussgliedfläche (7) derart schräg steht, dass die erste Schrägfläche (22) schräg in die der Schliessrichtung (8) entgegen gesetzte Öffnungsrichtung (9) weist und die erste Schrägfläche (22) in ihrer geometrischen Verlängerung von der geometrischen Verstellachse (6) mit dem Schrägstellungswinkel (24) geschnitten wird,
• der Schrägstellungswinkel (24) zwischen 3 und 15 Grad beträgt und
• die zweite Schrägfläche (23) derart ausgebildet ist, dass die zweite Schrägfläche (23) in der geschlossenen Position (C) des Verschlussglieds (5) in parallele Gegenüberlage zu einer die Öffnung (3) umschliessenden ersten Schrägfläche (22), die im Bereich zwischen der Öffnung (3) und der ersten Dichtfläche (10) angeordnet ist, bringbar ist.

12. Verschlussglied (5) nach Anspruch 11,
**dadurch gekennzeichnet, dass**
die zweite Schrägfläche (23) als geschlossenes, elektrisch leitendes Schirmungsschild (23a), mittels welchem in der geschlossenen Position (C) die Öffnung (3) vollständig überdeckbar ist, ausgebildet ist.

13. Verschlussglied (5) nach Anspruch 11,
**dadurch gekennzeichnet, dass**
die zweite Schrägfläche (23) von einer elastischen Zusatzdichtung (25a; 25b; 25c) gebildet wird, die insbesondere
• von einem in einer Nut (26) angeordneten O-Ring, insbesondere mit einem kreisförmigen Querschnitt (25a), einem nierenförmigen Querschnitt (25b) oder einem X-förmigen Querschnitt (25c),
oder
• von einer auf dem Verschlussglied (5) aufvulkanisierten Dichtung
gebildet wird.

14. Verschlussglied (5) nach einem der Ansprüche 11 bis 13, **dadurch gekennzeichnet, dass**
• die beiden ersten Schenkel (15a') jeweils im Wesentlichen entlang zu der Verstellachse (6) parallelen ersten Schenkelebenen (16a) verlaufen,
• die beiden zweiten Schenkel (15b') im Wesentlichen entlang zu der Verstellachse (6) parallelen zweiten Schenkelebenen (16b) verlaufen,
• die erste Hauptfläche (13a'), die zweite Hauptfläche (13b'), die Verschlussgliedfläche (7), die erste Schrägfläche (22) und die zweite Schrägfläche (23) jeweils von geometrischen Ebenen gebildet werden und
• die ersten Schenkelebenen (16a) auf der geometrischen Ebene der ersten Hauptfläche (13a') und die zweiten Schenkelebenen (16b) auf der geometrischen Ebene der zweiten Hauptfläche (13b') liegen.

15. Verschlussglied (5) nach einem der Ansprüche 11 bis 13, **dadurch gekennzeichnet, dass**
• die beiden ersten Schenkel (15a') jeweils im Wesentlichen entlang zu der Verstellachse (6) parallelen ersten Schenkelebenen (16a) verlaufen,
• zwischen dem ersten Hauptabschnitt (12a') und den beiden ersten Schenkeln (15a') jeweils ein erster Krümmungsabschnitt (17a') der zweiten Dichtfläche (11) angeordnet ist,
• die im ersten Hauptabschnitt (12a') entlang der ersten Hauptfläche (13a') verlaufende zweite Dichtfläche (11) jeweils in die ersten Krümmungsabschnitte (17a') übergeht, wobei der jeweilige Übergang von dem ersten Hauptabschnitt (12a') in den jeweiligen ersten Krümmungsabschnitt (17a') jeweils in einer geometrischen ersten Tangentialebene (13a) zu der ersten Hauptfläche (13a') erfolgt,
• die beiden ersten Schenkelebenen (16a) jeweils um mindestens 15 Grad gegenüber der jeweiligen ersten Tangentialebene (13a) abgewinkelt sind,
• die im ersten Hauptabschnitt (12a') entlang der erste Hauptfläche (13a') verlaufende zweite Dichtfläche (11) in dem ersten Krümmungsabschnitt (17a') aus der ersten Hauptfläche (13a') um die mindestens 15 Grad, insbesondere mittels einer geometrischen Krümmung, hinausgeführt ist und in die erste Schenkelebene (16a) übergeht und
• insbesondere die erste Hauptfläche (13a'), die zweite Hauptfläche (13b') und die Verschlussgliedfläche (7) zumindest in einem Teilabschnitt um eine - insbesondere zur Verstellachse (6) im Wesentlichen parallele - Krümmungsachse (21) gekrümmt sind.

16. Vakuumventil (1) zum gasdichten Schliessen eines Fliesswegs (F) mittels einer Linearbewegung, insbesondere Vakuumventil nach einem der Ansprüche 1 bis 10, mit
• einem Ventilgehäuse (2) mit einer Öffnung (3) für den Fliessweg (F), wobei die Öffnung (3) eine geometrische Öffnungsachse (4) entlang des Fliesswegs (F) aufweist,
• einem Verschlussglied (5), das linear entlang einer zu der Öffnungsachse (4) quer verlaufenden, geometrischen Verstellachse (6) in einer Verschlussgliedfläche (7) von
□ einer die Öffnung (3) freigebenden, geöffneten Position (O) in
□ eine über die Öffnung (3) linear geschobene, geschlossene Position (C) in eine Schliessrichtung (8)
und umgekehrt zurück in eine Öffnungsrichtung (9) verschiebbar ist,
• einer die Öffnung (3) umschliessenden, zumindest teilweise gekrümmten ersten Dichtfläche (10) des Ventilgehäuses (2) und
• einer mit der ersten Dichtfläche (10) korrespondierenden, eine der ersten Dichtfläche (10) entsprechende Form aufweisenden zweiten Dichtfläche (11) des Verschlussglieds (5),
wobei
• sich die erste Dichtfläche (10) aus unterschiedlich geformten, jeweils zu der Verstellachse (6) nichtparallelen Abschnitten (12a, 12b, 14a, 14b, 17a, 17b) zusammensetzt,
• die Flächennormalen der Abschnitte (12a, 12b, 14a, 14b, 17a, 17b) der ersten Dichtfläche (10) zu der Verstellachse (6) jeweils parallele Richtungskomponenten aufweisen und somit die erste Dichtfläche (10) senkrecht oder schräg in die Öffnungsrichtung (9) weist,
• ein erster Hauptabschnitt (12a) der ersten Dichtfläche (10) im Wesentlichen entlang einer geometrischen ersten Hauptfläche (13a') verläuft,
• ein zweiter Hauptabschnitt (12b) der ersten Dichtfläche (10) im Wesentlichen entlang einer geometrischen zweiten Hauptfläche (13b') verläuft,
• die erste Hauptfläche (13a') und die zweite Hauptfläche (13b') parallel zu der Verstellachse (6) verlaufen, zueinander beabstandet sind und im Wesentlichen parallel zu der Verschlussgliedfläche (7) verlaufen und somit der erste Hauptabschnitt (12a) und der gegenüberliegende zweite Hauptabschnitt (12b) zueinander einen geometrischen Versatz quer zu der Verstellachse (6) aufweisen,
• zwischen den beiden gegenüberliegenden Hauptabschnitten (12a, 12b) die Öffnung (3) angeordnet ist,
• ein seitlicher erster U-förmiger Seitenabschnitt (14a) der ersten Dichtfläche (10) den ersten Hauptabschnitt (12a) und den zweite Hauptabschnitt 12b) auf der einen Seite der ersten Dichtfläche (10) verbindet,
• ein seitlicher zweiter U-förmiger Seitenabschnitt (14b) der ersten Dichtfläche (10) den ersten Hauptabschnitt (12a) und den zweiten Hauptabschnitt (12b) auf der anderen Seite der ersten Dichtfläche (10) verbindet,
• der erste U-förmige Seitenabschnitt (14a) und der zweite U-förmige Seitenabschnitt (14b) jeweils einen dem ersten Hauptabschnitt (12a) zugeordneten ersten Schenkel (15a), einen dem zweiten Hauptabschnitt (12b) zugeordneten zweiten Schenkel (15b) und eine Basis (15c), die insbesondere als Bogen ausgebildet ist, aufweist,
• die beiden ersten Schenkel (15a) jeweils im Wesentlichen entlang zu der Verstellachse (6) parallelen ersten Schenkelebenen (16a) verlaufen,
• der erste Schenkel (15a) und der zweite Schenkel (15b) zueinander einen geometrischen Versatz quer zu der Verstellachse (6) aufweisen,
• die jeweilige Basis (15c) jeweils den ersten Schenkel (15a) und den zweiten Schenkel (15b) verbindet und den geometrischen Versatz quer zu der Verstellachse (6) überbrückt, und
• die zweite Dichtfläche (11) in der geschlossenen Position (C) in einem auf die erste Dichtfläche (10) in die Schliessrichtung (8) drückenden, dichtenden Kontakt mit der ersten Dichtfläche (10) steht und das Verschlussglied (5) mit einer Verschlussfläche (19) die Öffnung (3) gasdicht verschliesst,
**dadurch gekennzeichnet, dass**
• zwischen dem ersten Hauptabschnitt (12a) und den beiden ersten Schenkeln (15a) jeweils ein erster Krümmungsabschnitt (17a) der ersten Dichtfläche (10) angeordnet ist,
• die im ersten Hauptabschnitt (12a) entlang der ersten Hauptfläche (13a') verlaufende erste Dichtfläche (10) jeweils in die ersten Krümmungsabschnitte (17a) übergeht, wobei der jeweilige Übergang von dem ersten Hauptabschnitt (12a) in den jeweiligen ersten Krümmungsabschnitt (17a) jeweils in einer geometrischen ersten Tangentialebene (13a) zu der ersten Hauptfläche (13a') erfolgt,
• die beiden ersten Schenkelebenen (16a) jeweils um mindestens 15 Grad gegenüber der jeweiligen ersten Tangentialebene (13a) abgewinkelt sind,
• die im ersten Hauptabschnitt (12a) entlang der ersten Hauptfläche (13a') verlaufende erste Dichtfläche (10) in dem ersten Krümmungsabschnitt (17a) aus der ersten Hauptfläche (13a') um die mindestens 15 Grad, insbesondere mittels einer geometrischen Krümmung, hinausgeführt ist und in die erste Schenkelebene (16a) übergeht und
• die erste Hauptfläche (13a'), die zweite Hauptfläche (13b') und die Verschlussgliedfläche (7) zumindest in einem Teilabschnitt um eine - insbesondere zur Verstellachse (6) im Wesentlichen parallele - Krümmungsachse (21) gekrümmt sind.

17. Vakuumventil (1) nach Anspruch 16,
**dadurch gekennzeichnet, dass**
die erste Hauptfläche (13a'), die zweite Hauptfläche (13b') und die Verschlussgliedfläche (7) zumindest in dem Teilabschnitt um die Krümmungsachse (21) um mindestens 15 Grad, insbesondere um mindestens 30 Grad, insbesondere um mindestens 45 Grad, insbesondere zwischen 45 Grad und 105 Grad, gekrümmt sind.

18. Vakuumventil (1) nach Anspruch 16 oder 17,
**dadurch gekennzeichnet, dass**
• die beiden zweiten Schenkel (15b) im Wesentlichen entlang zu der Verstellachse (6) parallelen zweiten Schenkelebenen (16b) verlaufen,
• zwischen dem zweiten Hauptabschnitt (12b) und den beiden zweiten Schenkeln (15b) jeweils ein zweiter Krümmungsabschnitt (17b) der ersten Dichtfläche (10) angeordnet ist,
• die im zweiten Hauptabschnitt (12b) entlang der zweiten Hauptfläche (13b') verlaufende erste Dichtfläche (10) jeweils in die zweiten Krümmungsabschnitte (17b) übergeht, wobei der jeweilige Übergang von dem zweiten Hauptabschnitt (12b) in den jeweiligen zweiten Krümmungsabschnitt (17b) jeweils in einer geometrischen zweiten Tangentialebene (13b) zu der zweiten Hauptfläche (13b') erfolgt,
• die beiden zweiten Schenkelebenen (16b) jeweils um mindestens 15 Grad gegenüber der jeweiligen zweiten Tangentialebene (13b) abgewinkelt sind und
• die im zweiten Hauptabschnitt (12b) entlang der zweiten Hauptfläche (13b') verlaufende erste Dichtfläche (10) in dem zweiten Krümmungsabschnitt (17b) aus der zweiten Hauptfläche (13b') um die mindestens 15 Grad, insbesondere mittels einer geometrischen Krümmung, hinausgeführt ist und in die zweite Schenkelebene (16b) übergeht.

19. Vakuumventil (1) nach Anspruch 18,
**dadurch gekennzeichnet, dass**
• die erste Schenkelebene (16a) und die zweite Schenkelebene (16b) des ersten U-förmigen Seitenabschnitts (14a) im Wesentlichen parallel zueinander verlaufen und
• die erste Schenkelebene (16a) und die zweite Schenkelebene (16b) des zweiten U-förmigen Seitenabschnitts (14b) im Wesentlichen parallel zueinander verlaufen.

20. Vakuumventil (1) nach Anspruche 18 oder 19,
**dadurch gekennzeichnet, dass**
• die beiden ersten Schenkelebenen (16a) jeweils um mindestens 30 Grad, insbesondere um mindestens 45 Grad, insbesondere um mindestens 60 Grad, insbesondere um höchstens 120 Grad, gegenüber der ersten Tangentialebene (13a) und
• die beiden zweiten Schenkelebenen (16b) jeweils um mindestens 30 Grad, insbesondere um mindestens 45 Grad, insbesondere um mindestens 60 Grad, insbesondere um höchstens 120 Grad, gegenüber der zweiten Tangentialebene (13b)
abgewinkelt sind.

21. Vakuumventil (1) nach einem der Ansprüche 18 bis 20, **dadurch gekennzeichnet, dass**
• der erste Hauptabschnitt (12a) auf einer ersten Horizontalebene (18a), zu welcher die Verstellachse (6) eine Flächennormale bildet, verläuft,
• der zweite Hauptabschnitt (12b) auf einer zweiten Horizontalebene (18b), zu welcher die Verstellachse (6) eine Flächennormale bildet, verläuft,
• die erste Horizontalebene (18a) und die zweite Horizontalebene (18b) zueinander parallel und zueinander beabstandet verlaufen,
• sich die beiden ersten Schenkel (15a), die beiden zweiten Schenkel (15b) und die beiden Basen (15c) zwischen der ersten Horizontalebene (18a) und der zweiten Horizontalebene (18b) erstrecken und
• die beiden ersten Schenkel (15a) und die beiden zweiten Schenkel (15b), und insbesondere die beiden Basen (15c), den Abstand zwischen der ersten Horizontalebene (18a) und der zweiten Horizontalebene (18b) zumindest teilweise überbrücken.

22. Vakuumventil (1) nach Anspruch 21,
**dadurch gekennzeichnet, dass**
die beiden Basen (15c) auf einer gemeinsamen dritten Horizontalebene (18c), welche zwischen der ersten Horizontalebene (18a) und der zweiten Horizontalebene (18b) liegt zu welcher die Verstellachse (6) eine Flächennormale bildet, verlaufen und insbesondere jeweils als Bogen ausgebildet sind.

23. Vakuumventil (1) nach Anspruch 22,
**dadurch gekennzeichnet, dass**
die dritte Horizontalebene (18c) mittig zwischen der ersten Horizontalebene (18a) und der zweiten Horizontalebene (18b) liegt.

24. Vakuumventil (1) nach Anspruch 21,
**dadurch gekennzeichnet, dass**
• die beiden Basen (15c) den Abstand zwischen der ersten Horizontalebene (18a) und der zweiten Horizontalebene (18b) teilweise überbrücken und jeweils als ein sich im Wesentlichen parallel zu der Verstellachse (6) erstreckendes Segment einer Helix ausgebildet sind.

25. Vakuumventil (1) nach einem der Ansprüche 21 bis 24, **dadurch gekennzeichnet, dass**
• die beiden ersten Krümmungsabschnitte (17a) auf der ersten Horizontalebene (18a) und
• die beiden zweiten Krümmungsabschnitte (17b) auf der zweiten Horizontalebene (18b)
verlaufen.

26. Vakuumventil (1) nach einem der Ansprüche 21 bis 24, **dadurch gekennzeichnet, dass**
• sich die beiden ersten Krümmungsabschnitte (17a) und die beiden zweiten Krümmungsabschnitte (17b) zwischen der ersten Horizontalebene (18a) und der zweiten Horizontalebene (18b) erstrecken und
• die beiden ersten Krümmungsabschnitte (17a) und die beiden zweiten Krümmungsabschnitte (17b) den Abstand zwischen der ersten Horizontalebene (18a) und der zweiten Horizontalebene (18b) teilweise überbrücken,
• insbesondere die beiden ersten Krümmungsabschnitte (17a) und die beiden zweiten Krümmungsabschnitte (17b) als ein sich im Wesentlichen parallel zu der Verstellachse (6) erstreckendes Segment einer Helix ausgebildet sind.

27. Vakuumventil (1) nach einem der Ansprüche 16 bis 26, **dadurch gekennzeichnet, dass**
• das Vakuumventil (1) als ein Transferventil ausgebildet ist und
• die Breite (w) der Öffnung senkrecht zu der Verstellachse (6) mindestens das Doppelte, insbesondere mindestens das Dreifache, insbesondere mindestens das Fünffache, der Höhe (h) der Öffnung parallel zu der Verstellachse (6) beträgt.

28. Verschlussglied (5) zum gasdichten Schliessen eines Fliesswegs (F) mittels einer Linearbewegung, insbesondere Verschlussglied (5) nach einem der Ansprüche 11 bis 15, insbesondere für ein Vakuumventil nach einem der Ansprüche 16 bis 27, mit
• einer geometrischen Verstellachse (6) in einer Verschlussgliedfläche (7) und
• einer zweiten Dichtfläche (11)
wobei
• sich die zweite Dichtfläche (10) aus unterschiedlich geformten, jeweils zu der Verstellachse (6) nichtparallelen Abschnitten (12a', 12b', 14a', 14b', 17a', 17b') zusammensetzt,
• die Flächennormalen der Abschnitte (12a', 12b', 14a', 14b', 17a', 17b') der zweiten Dichtfläche (11) zu der Verstellachse (6) jeweils parallele Richtungskomponenten aufweisen und somit die zweite Dichtfläche (11) senkrecht oder schräg in eine Öffnungsrichtung (9) der Verstellachse (6) weist,
• ein erster Hauptabschnitt (12a') der zweiten Dichtfläche (11) im Wesentlichen entlang einer geometrischen ersten Hauptfläche (13a') verläuft,
• ein zweiter Hauptabschnitt (12b') der zweiten Dichtfläche (11) im Wesentlichen entlang einer geometrischen zweiten Hauptfläche (13b') verläuft,
• die erste Hauptfläche (13a') und die zweite Hauptfläche (13b') parallel zu der Verstellachse (6) verlaufen, zueinander beabstandet sind und im Wesentlichen parallel zu der Verschlussgliedfläche (7) verlaufen und somit der erste Hauptabschnitt (12a') und der gegenüberliegende zweite Hauptabschnitt (12b') zueinander einen geometrischen Versatz quer zu der Verstellachse (6) aufweisen,
• zwischen den beiden gegenüberliegenden Hauptabschnitten (12a', 12b') eine Verschlussfläche (19) des Verschlussgliedes (5) angeordnet ist,
• ein seitlicher erster U-förmiger Seitenabschnitt (14a') der zweiten Dichtfläche (11) den ersten Hauptabschnitt (12a') und den zweiten Hauptabschnitt (12b') auf der einen Seite der zweiten Dichtfläche (11) verbindet,
• ein seitlicher zweiter U-förmiger Seitenabschnitt (14b') der zweiten Dichtfläche (11) den ersten Hauptabschnitt (12a') und den zweiten Hauptabschnitt (12b') auf der anderen Seite der zweiten Dichtfläche (11) verbindet,
• der erste U-förmige Seitenabschnitt (14a') und der zweite U-förmige Seitenabschnitt (14b') jeweils einen dem ersten Hauptabschnitt (12a') zugeordneten ersten Schenkel (15a'), einen dem zweiten Hauptabschnitt (12b') zugeordneten zweiten Schenkel (15b') und eine Basis (15c') aufweist,
• die beiden ersten Schenkel (15a') jeweils im Wesentlichen entlang zu der Verstellachse (6) parallelen ersten Schenkelebenen (16a) verlaufen,
• der erste Schenkel (15a') und der zweite Schenkel (15b') zueinander einen geometrischen Versatz quer zu der Verstellachse (6) aufweisen,
• die jeweilige Basis (15c') jeweils den ersten Schenkel (15a') und den zweiten Schenkel (15b') verbindet und den geometrischen Versatz quer zu der Verstellachse (6) überbrückt, und
• mittels der zweiten Dichtfläche (11) in einer geschlossenen Position (C) des Verschlussglieds (5) ein dichtender Kontakt mit einer ersten Dichtfläche (10) eines Vakuumventils (1) zum gasdichten Verschliessen einer Öffnung (3) des Vakuumventils (1) durch lineares Drücken der zweiten Dichtfläche (11) auf die erste Dichtfläche (10) in eine Schliessrichtung (8) der Verstellachse (6) herstellbar ist,
**dadurch gekennzeichnet, dass**
• zwischen dem ersten Hauptabschnitt (12a') und den beiden ersten Schenkeln (15a') jeweils ein erster Krümmungsabschnitt (17a') der zweiten Dichtfläche (11) angeordnet ist,
• die im ersten Hauptabschnitt (12a') entlang der ersten Hauptfläche (13a') verlaufende zweite Dichtfläche (11) jeweils in die ersten Krümmungsabschnitte (17a') übergeht, wobei der jeweilige Übergang von dem ersten Hauptabschnitt (12a') in den jeweiligen ersten Krümmungsabschnitt (17a') jeweils in einer geometrischen ersten Tangentialebene (13a) zu der ersten Hauptfläche (13a') erfolgt,
• die beiden ersten Schenkelebenen (16a) jeweils um mindestens 15 Grad gegenüber der jeweiligen ersten Tangentialebene (13a) abgewinkelt sind,
• die im ersten Hauptabschnitt (12a') entlang der erste Hauptfläche (13a') verlaufende zweite Dichtfläche (11) in dem ersten Krümmungsabschnitt (17a') aus der ersten Hauptfläche (13a') um die mindestens 15 Grad, insbesondere mittels einer geometrischen Krümmung, hinausgeführt ist und in die erste Schenkelebene (16a) übergeht und
• die erste Hauptfläche (13a'), die zweite Hauptfläche (13b') und die Verschlussgliedfläche (7) zumindest in einem Teilabschnitt um eine - insbesondere zur Verstellachse (6) im Wesentlichen parallele - Krümmungsachse (21) gekrümmt sind.

29. Verschlussglied (5) nach Anspruch 28,
**dadurch gekennzeichnet, dass**
die erste Hauptfläche (13a'), die zweite Hauptfläche (13b') und die Verschlussgliedfläche (7) zumindest in dem Teilabschnitt um die Krümmungsachse (21) um mindestens 15 Grad, insbesondere um mindestens 30 Grad, insbesondere um mindestens 45 Grad, insbesondere zwischen 45 Grad und 105 Grad, gekrümmt sind.

30. Verschlussglied (5) nach Anspruch 28 oder 29,
**dadurch gekennzeichnet, dass**
• die beiden zweiten Schenkel (15b') im Wesentlichen entlang zu der Verstellachse (6) parallelen zweiten Schenkelebenen (16b) verlaufen,
• zwischen dem zweiten Hauptabschnitt (12b') und den beiden zweiten Schenkeln (15b') jeweils ein zweiter Krümmungsabschnitt (17b') der zweiten Dichtfläche (11) angeordnet ist,
• die im zweiten Hauptabschnitt (12b') entlang der zweiten Hauptfläche (13b') verlaufende zweite Dichtfläche (11) jeweils in die zweiten Krümmungsabschnitte (17b') übergeht, wobei der jeweilige Übergang von dem zweiten Hauptabschnitt (12b') in den jeweiligen zweiten Krümmungsabschnitt (17b') jeweils in einer geometrischen zweiten Tangentialebene (13b) zu der zweiten Hauptfläche (13b') erfolgt,
• die beiden zweiten Schenkelebenen (16b) jeweils um mindestens 15 Grad gegenüber der jeweiligen zweiten Tangentialebene (13b) abgewinkelt sind und
• die im zweiten Hauptabschnitt (12b') entlang der zweiten Hauptfläche (13b') verlaufende zweite Dichtfläche (11) in dem zweiten Krümmungsabschnitt (17b') aus der zweiten Hauptfläche (13b') um die mindestens 15 Grad, insbesondere mittels einer geometrischen Krümmung, hinausgeführt ist und in die zweite Schenkelebene (16b) übergeht.

31. Vakuumventil nach Anspruch 30,
**dadurch gekennzeichnet, dass**
• die erste Schenkelebene (16a) und die zweite Schenkelebene (16b) des ersten U-förmigen Seitenabschnitts (14a') im Wesentlichen parallel zueinander verlaufen und
• die erste Schenkelebene (16a) und die zweite Schenkelebene (16b) des zweiten U-förmigen Seitenabschnitts (14b') im Wesentlichen parallel zueinander verlaufen.
